(19) **Europäisches Patentamt / European Patent Office / Office européen des brevets**

(11) **EP 3 293 494 B1**

(12) **EUROPEAN PATENT SPECIFICATION**

(45) Date of publication and mention
of the grant of the patent:
**08.05.2019 Bulletin 2019/19**

(51) Int Cl.:
*G01D 4/00* (2006.01)  *H02J 3/14* (2006.01)

(21) Application number: **16187556.2**

(22) Date of filing: **07.09.2016**

(54) **ELECTRONIC DEVICE TO CONTROL THE ELECTRICAL ENERGY DELIVERED TO AN ELECTRIC PLANT**

ELEKTRONISCHE VORRICHTUNG ZUR STEUERUNG DER AN EINE ELEKTRISCHE ANLAGE GELIEFERTEN ELEKTRISCHEN ENERGIE

DISPOSITIF ÉLECTRONIQUE POUR COMMANDER L'ÉNERGIE ÉLECTRIQUE FOURNIE À UNE INSTALLATION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.03.2018 Bulletin 2018/11**

(73) Proprietor: **AUTOMATION ENGINEERING INNOVATION S.R.L.**
**87100 Cosenza (CS) (IT)**

(72) Inventor: **D'AGOSTINO, Vincenzo**
**87050 ZUMPANO (COSENZA) (IT)**

(74) Representative: **Penza, Giancarlo**
**Bugnion S.p.A.**
**Viale Lancetti, 17**
**20158 Milano (IT)**

(56) References cited:
**EP-A1- 1 898 292     EP-A1- 2 072 958**
**WO-A1-00/52806      WO-A2-2011/127514**

**Description**

TECHNICAL FIELD

The present invention generally relates to the sector of management of electrical energy.
More in particular, the present invention concerns an electronic device to control the electrical energy delivered to an electric plant of a domestic or industrial type.

BACKGROUND ART

Electronic devices are known to control an electric plant, having the function of controlling the flow of electrical power from the electric distribution network to the electric plant of a user of a domestic or industrial type.
Said known devices have the task of monitoring the value of the instantaneous electrical power and/or of calculating the value of the electrical mean power absorbed by the electric distribution network and of performing the disconnection of the electric plant when an overload condition occurs.
The Applicant has observed that the known devices have the following disadvantages:

- the overload condition is reached (and thus the delivery of electrical energy towards the electric plant is interrupted) for an excessive number of times, thus reducing the electrical power that is effectively supplied to the user of the electric plant;
- delivery of electrical energy towards the electric plant is instantaneously interrupted;
- it does not take into account the different types of electrical loads connected to the electric plant.

A related electronic device is known from EP 1 898 292 A1.

SUMMARY OF THE INVENTION

The present invention relates to an electronic device to control the electrical energy delivered to an electric plant as defined in the enclosed claim 1 and the preferred embodiments thereof described in the dependent claims from 2 to 10.
The Applicant has perceived that the electronic device according to the present invention has the following advantages:

- it reduces the number of interruptions (blackouts) of electrical energy delivery towards the electric plant, thus increasing the electrical power that is effectively supplied to the user of the electric plant;
- it performs a selective disconnection of a part of the electrical loads connected to the electric plant, thus allowing to continue to supply the remaining part of the electrical loads;
- it takes into account the different types of electrical loads connected to the electric plant (for example, the different priority between two or more electrical loads or the different nominal power absorbed bu the electrical loads).

It is also an object of the present invention a system to manage the electrical energy of an electric plant as defined in the enclosed claim 11.
It is also an object of the present invention a method for controlling the electrical energy delivered to an electric plant as defined in the enclosed claim 12 and by its preferred embodiments described in the dependent claims 13 and 14.
It is also an object of the present invention a computer programas defined in the enclosed claim 15.

BRIEF DESCRIPTION OF THE DRAWINGS

Figure 1 is a block diagram of a system for electrical energy management of an electric plant according to the invention.
Figure 2 shows the possible operation zones of the electric plant controlled by the management system according to the invention, as a function of the absorbed mean power and of the time.
Figure 3 shows a possible trend of some electrical signals of the electrical energy management system of Figure 1.
Figures 4A-4D show the flowchart of the method for controlling the electrical energy delivered to an electric plant according to a first embodiment of the invention.
Figure 5 shows the flowchart of a possible criterion for disconnecting electrical loads from the electric plant.
Figure 6 shows the flowchart of a possible criterion for connecting electrical loads to the electric plant.

Figures 7A-7B show the flowchart of the method for controlling the electrical energy delivered to an electric plant according to a second embodiment of the invention.

BEST MODE TO CARRY OUT THE INVENTION

It should be observed that in the following description, identical or analogous blocks, components or modules are indicated in the figures with the same numerical references.

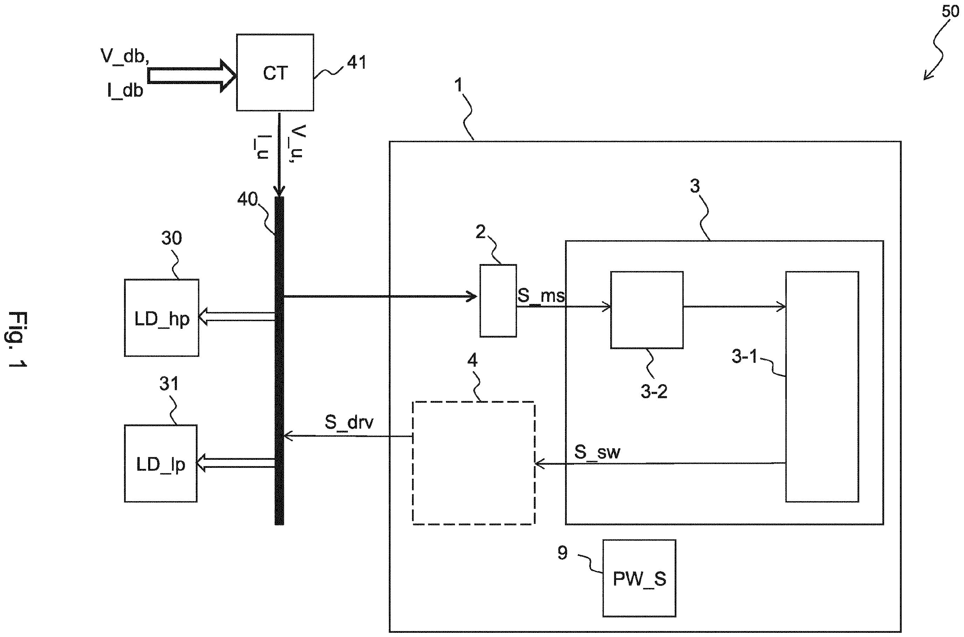

With reference to figure 1, it shows a block diagram of a system 50 for the management of electrical energy of an electric plant 40 according to the invention.

The electric plant 40 can be of a domestic or an industrial type.

The system 50 comprises:

- the electric plant 40;
- two electrical loads 30, 31;
- an electronic control device 1;
- an electrical counter 41.

It is observed that for the sake of simplicity, for the purposes of the description of the invention only two electrical loads 30, 31 were taken into consideration but in more general terms the invention is applicable to at least one electrical load.

The electronic control device 1 has the function of controlling the electrical energy delivered by the electric distribution network towards the electric plant 40, as will be described in more detail in the following.

The electronic control device 1 is positioned for example in the same environment as the electric plant 40, such as for example in a domestic environment or an office.

In particular, the electronic device 1 can be installed between the electronic counter 41 and the electric plant 40, as schematically shown in Figure 1.

Alternatively, the electronic device 1 can be integrated internally of the electronic counter 41.

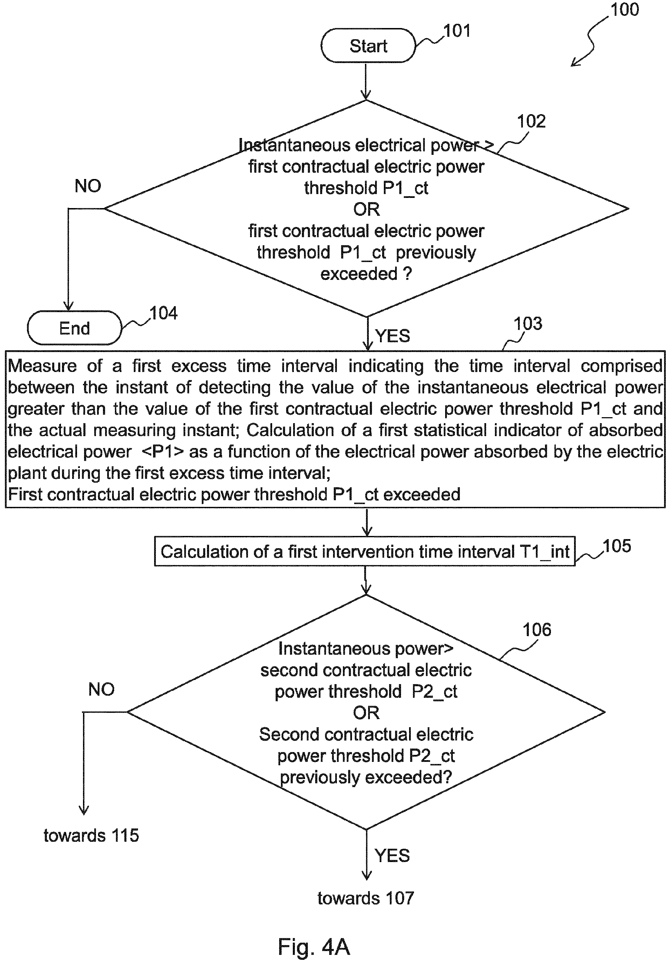

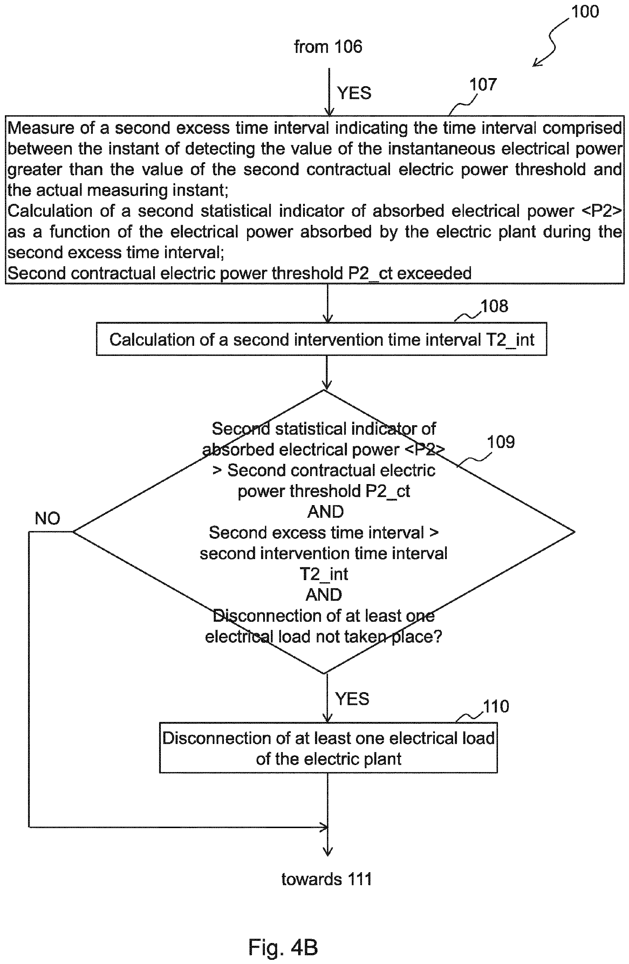

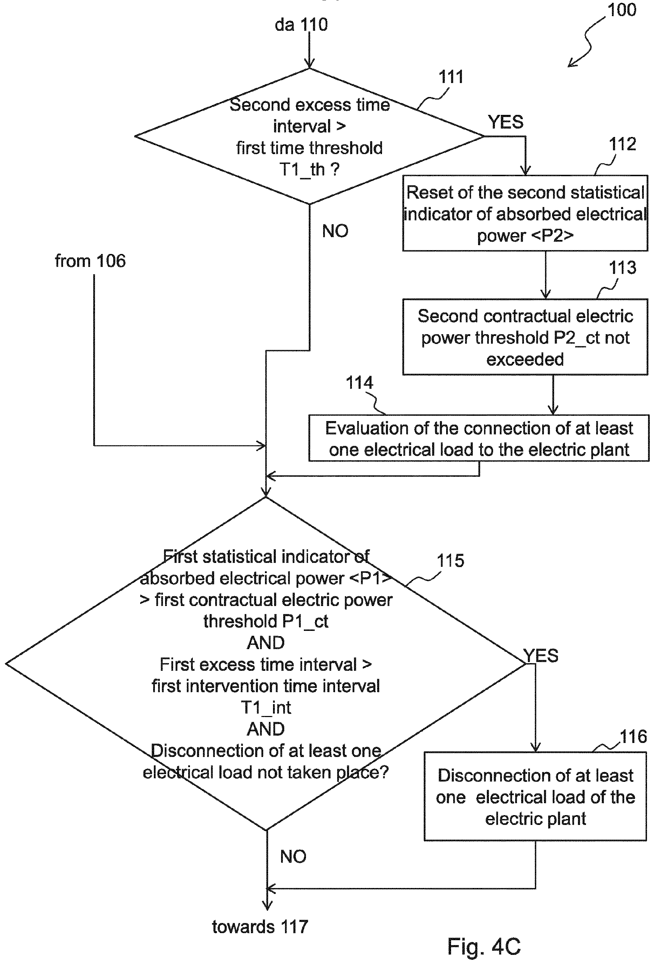

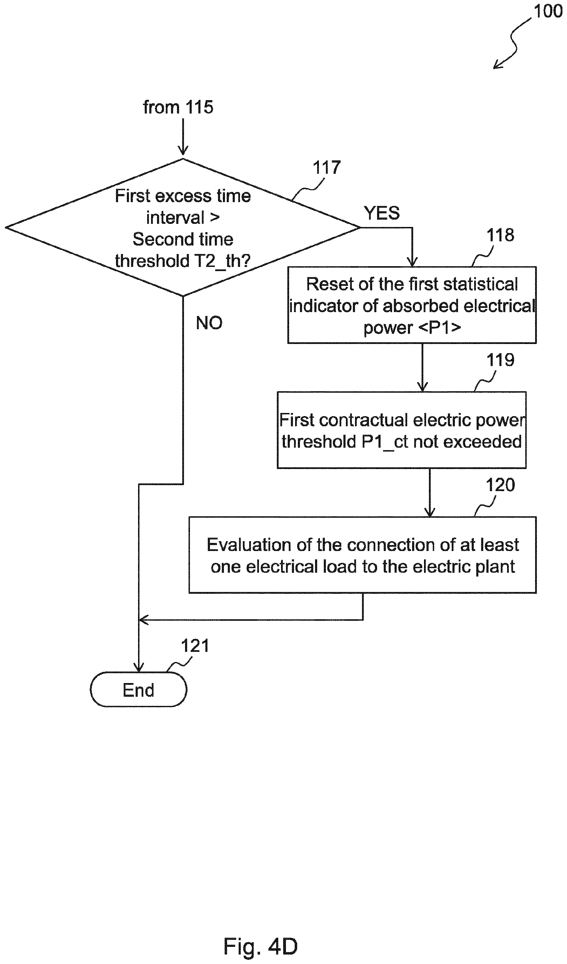

Alternatively, the electronic counter 41 can be programmed differently in terms of software and can be appropriately modified in terms of hardware so as to implement the method for controlling the electrical energy, as illustrated in the following part of the description of the flowchart 100 of Figures 4A-4D.

The two electrical loads 30, 31 are electrically connected in a switchable way to the electric plant 40.

In particular, each of the two electrical loads is switchable between the connected condition wherein the electrical load is electrically connected to the electric plant 40 and a disconnected condition wherein the electrical load is electrically disconnected from the electric plant 40.

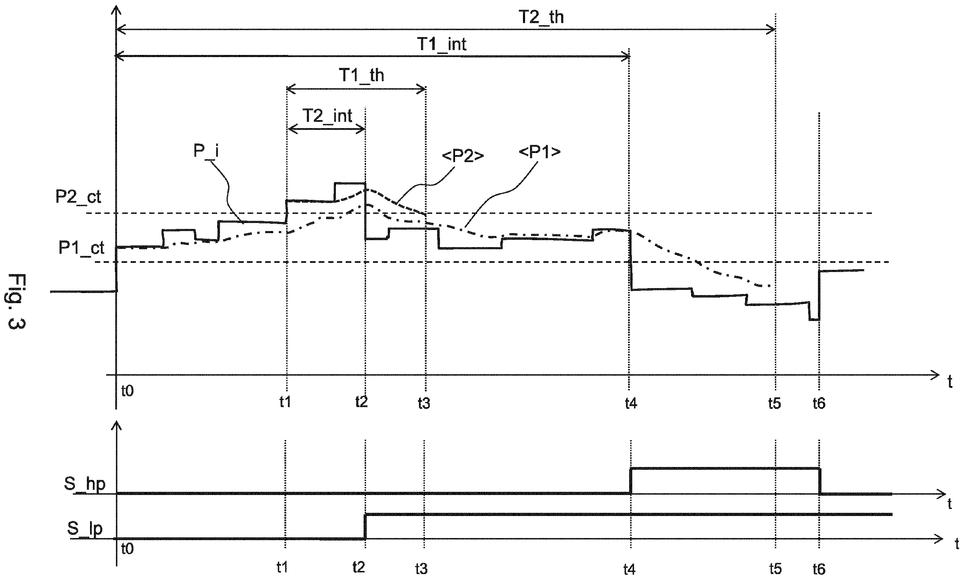

The connected/disconnected condition of the electrical load 30 will be denoted in Figure 3 by $S\_hp$, wherein $S\_hp$ has a low logic value for indicating the connected condition wheerin the electrical load 30 is connected to the electric plant 40 and $S\_hp$ has a high logic value for indicating the disconnected condition wherein the electrical load 30 is disconnected from the electric plant 40.

Likewise, the connected/disconnected condition of the electrical load 31 will be denoted in Figure 3 by $S\_lp$, wherein $S\_lp$ has a low logic value for indicating the connected condition wherein the electrical load 31 is electrically connected to the electric plant 40 and $S\_lp$ has a high logic value for indicating the disconnected condition wherein the electrical load 31 is electrically disconnected from the electric plant 40.

The electrical loads can be for example one or more electrical apparatus selected from among the following:

- one or more electrical domestic appliances;
- lighting systems;
- one or more electronic devices, such as for example personal computers, servers;
- anti-theft plants;
- video-surveillance plants;
- machine tools;
- domestic plants of the "HVAC" type;
- domotic plants;
- plants for water purification of swimming pools or other similar plants.

The electronic counter 41 is interposed between an electric distribution network and the electric plant 40.

The electronic counter 41 has the function of receiving a distribution electrical voltage $V\_db$ and a distribution electric current $I\_db$ from an electric distribution network (not shown in Figure 1) and of supplying electrical energy to the electric plant 40, powering it with an electrical voltage $V\_u$ and an electric current $I\_u$.

Moreover, the electronic counter 41 is configured to interrupt (by means of an internal switch) the delivery of the electrical energy towards the electric plant 40 in case wherein an overload condition occurs in the electric plant 40, taking into account the electrical power absorbed by the electric plant 40, a contractual electrical power value and the values of the first and second time threshold T1_th, T2_th.

The term "contractual electrical power" is understood to mean the value of the electrical power guaranteed by the network manager to an electrical user (i.e. the electrical power that the electric plant 40 can absorb from the electric distribution network) and is defined when signing the supply contract of the electrical user.

For example, in a case of an electric plant 40 of a domestic type, the value of the contractual electrical power is 3 Kw.

The electronic control device 1 in turn comprises a sensor 2, a control unit 3 and a switching unit 4.

The sensor 2 has the function of measuring the electrical voltage V_u and an electric current I_u of the electric plant 40 and is configured to generate a measurement signal S_ms indicating said measurement of the electrical voltage V_u and of the electric current I_u.

The sensor 2 is for example a transformer having a first coil electrically connected to the electric plant 40 and having a second coil electrically connected to the control unit 3.

The control unit 3 is electrically connected to the at least one sensor 2 and comprises an input terminal adapted to receive the measurement signal S_ms.

Moreover, the control unit 3 comprises an output terminal adapted to transmit a switching signal S_sw indicating the connected /disconnected condition of the electrical loads 30, 31.

Therefore each one of the electrical loads 30, 31 can assume the following two conditions:

- a "connected" condition, wherein the electrical load is electrically connected to the electric plant 40;
- a "disconnected" condition, wherein the electrical load is electrically disconnected from the electric plant 40.

The switching unit 4 is electrically connected to the control unit 3 and comprises an input terminal adapted to receive the switching signal S_sw indicating the connected or disconnected condition.

Moreover, the switching unit 4 comprises an output terminal adapted to transmit a driving signal S_drv in order to command the connection and disconnection of the electrical loads 30, 31 from the electric plant 40.

Alternatively, the switching unit 4 is external of the electronic control device 1 and can be directly connected to the electrical loads 30, 31; in this case each switching unit is connected to the electronic control device 1 by means of the switching signal S_sw of a radio type, for example Wi-Fi or Bluetooth.

Preferably, the electronic control device 1 further comprises an acoustic signalling unit electrically connected to the control unit 3 and having the function of emitting an acoustic signal for signalling to a user that the electrical power absorbed by the electric plant 40 has exceeded a value correlated to the contractual electrical power.

Preferably, the electronic device 1 further comprises a user interaction unit to allow the user to interact with the electronic device 1.

The user interaction unit comprises for example a keypad for entering configuration commands for the operation of the electronic device 1 and information reading commands stored into the electronic device 1 and comprises a screen to display the requested information; alternatively, the user interaction unit comprises a touch screen which allows both entering configuration and reading commands and for displaying the requested information.

Preferably, the electronic device 1 further comprises a non-volatile memory for storing the values of the measured electric quantities, in particular the maximum and minimum values of the voltage measured on the electric plant 40 in a defined time interval (for example 24 hours), together with a time marker for each stored voltage value.

Using the memory it is possible to have a permanent database with which a user (for example a specialised technical expert of the electrical energy supplier or even the final user) can make a detailed and precise analysis of how many times the voltage values differ from the values that must be contractually guaranteed by the electrical energy supplier and can analyse consumptions relating to a defined time interval.

Preferably, the electronic device 1 further comprises a signals transceiver for placing the electronic device 1 in communication with other devices external of the electronic device 1, by means of a short-distance communication channel or by means of a long-distance communication network of a fixed or radio type.

The transceiver can be selected from the following list:

- an RS485 or RS232 or RS 422 serial port;
- a port for an Ethernet communication;
- a module for an "XBee"/"ZigBee" radio communication;
- a module for a GSM, GPRS, UMTS or 4G radio communication;
- a module for Wi-Fi radio communication;
- a module for Bluetooth radio communication;

Preferably, the system 50 further comprises an external signalling unit positioned for example externally of the environment wherein the electronic control device 1 is installed and having the function of generating an acoustic or visual signal representing the following information:

- signalling to a user that the electrical power absorbed by the electric plant 40 has exceeded a value correlated to the contractual electrical power;
- signalling to the user the status of the electric plant 40, such as for example the lack of network voltage or exceeding the absorbed power greater than a threshold value;
- in the case of a presence of a photovoltaic plant, signalling if the value of the electrical energy injected into the electric plant 40 is greater than a threshold value;
- signalling the presence of a condition of the electrical voltage interruption (blackout) on the electric plant 40.

Preferably, the system 50 further comprises a remote control unit for remote communication with the control device 1 via a short-distance communication or by means of a long-distance telecommunications network.

The remote control unit is for example a desktop personal computer or laptop type.

Advantageously, the control unit 3 comprises a processing unit 3-1 and a measurement unit 3-2, which are electrically connected each other.

The measurement unit 3-2 has the function of processing the values of the voltage measurements and calculating therefrom the value of the instantaneous electrical power $P\_i$ absorbed by the electric plant 40; the processing unit 3-1 has, instead, the function of performing the other functions necessary for the generation of the switching signal $S\_sw$, as will be explained in greater detail in the following.

The presence of the measurement unit 3-2 separated from the processing unit 3-1 has the advantage of reducing the computational cost requested by the processing unit 3-1.

The measurement unit 3-2 is for example a dedicated electronic circuit.

The processing unit 3-1 is for example a microcontroller.

In the hypothesis wherein the sensor 2 is implemented with a transformer, the transformer comprises the second coil electrically connected to the measurement unit 3-2.

In greater detail, the processing unit 3-1 is configured to calculate the value of the switching signal $S\_sw$ for suitably controlling the connection/disconnection of the electrical loads 30, 31 with respect to the electric plant 40, as will be more fully explained in the following.

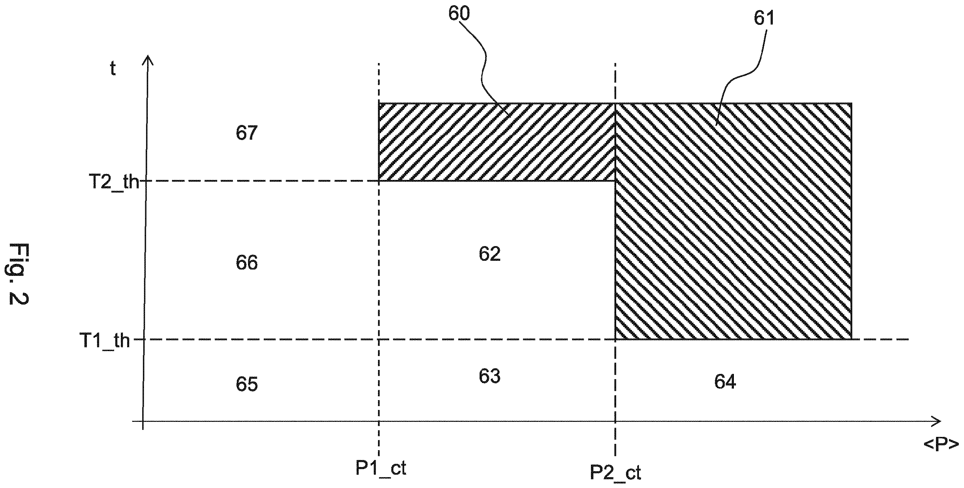

With reference to Figure 2, the possible operation zones 60-67 of the electric plant 40 are shown, according to a statistical indicator <P> of electrical power absorbed by the electric plant 40 and as a function of a time interval.

Said statistical indicator <P> of electrical power absorbed by the electric plant 40 is for example selected from the mean, mode or median of the electrical power absorbed by the electric plant 40.

In particular, the x-axis represents the statistical indicator <P> of electrical power absorbed by the electric plant 40, i.e a statistical indicator of the power delivered by the electric distribution network towards the electric plant 40; the y-axis instead represents a time interval.

It can be observed that the possible operation zones 60-67 of the electric plant 40 are defined on the x-axis by the value of a first contractual electric power threshold (denoted in the following by $P1\_ct$) and by the value of a second contractual electric power threshold (denoted in the following by $P2\_ct$), wherein the value of the second contractual electric power threshold $P2\_ct$ is greater than the value of the first contractual electric power threshold $P1\_ct$.

Moreover, the operation zones 60-67 are defined on the ordinate axis by the value of a first time threshold (denoted by $T1\_th$) and by the value of a second time threshold (denoted in the following by $T2\_th$), wherein the value of the second time threshold $T2\_th$ is greater than the value of the first time threshold $T1\_th$.

The values of the first contractual electric power threshold $P1\_ct$, of the second contractual electric power threshold $P2\_ct$, of the first time threshold $T1\_th$ and of the second time threshold $T2\_th$ are defined values and have the function of suitably limiting the consumption of electrical energy from the electric distribution network by the electric plant 40, as will be more fully explained in the following.

In particular, the values of the first contractual electric power threshold $P1\_ct$ and of the second contractual electric power threshold $P2\_ct$ are assigned by the manager of the electric distribution network and are calculated as a function of the value of the contractual electrical power $P\_ct$.

Still more in particular, the value of the first contractual electric power threshold $P1\_ct$ is equal to the sum of the value of the contractual electrical power and of a percentage X (for example, 10%) of the value of the contractual electrical power $P\_ct$, i.e. $P1\_ct = P\_ct + X \* P\_ct$; moreover, the value of the second contractual electric power threshold $P2\_ct$ is equal to the sum of value of the first contractual electric power threshold $P1\_ct$ and of a percentage Y (for example 37%) of the value of the first contractual electric power threshold $P1\_ct$, i.e. $P2\_ct = P1\_ct + Y \* P1\_ct$.

For example, in a case of an electric plant 40 of a domestic type, $P\_ct = 3$ Kw, $P1\_ct = 3.3$ Kw, $P2\_ct = 4.2$ Kw.

Likewise, the values of the first time threshold $T1\_th$ and of the second time threshold $T2\_th$ are assigned by the manager of the electric distribution network.

For example, in a case of an electric plant 40 of a domestic type in Italy, T1_th= 4 minutes, T2_th= 180 minutes.

In more detail, it can be observed in Figure 2 that there are two types of operation modes of the electric plant 40:

- a "connected" operation mode comprising zones 65, 63, 64, 66, 67, 62 (denoted by empty areas), wherein the electric plant 40 is connected to the electric distribution network and absorbs electrical energy therefrom: in this case, in the zone 65 both the electrical loads 30, 31 can be electrically connected automatically to the electric plant 40 by means of an suitable algorithm of control of the electrical energy and absorb electrical energy from the electric plant 40, while in zones 63, 64, 66, 67, 62 at least one of the electric loads 30, 31 is electrically connected automatically to the electric plant 40 by means of said control algorithm, or in zones 65, 63, 64, 66, 67, 62 it is possible that none of the electrical loads 30, 31 are electrically connected to the electric plant 40 in a case wherein they are manually disconnected by the user;
- a "disconnected" operation mode comprising zones 60, 61 (denoted by dashed areas), wherein the electric plant 40 is disconnected from the electric distribution network (from which it does not absorb electrical energy) and thus the electrical loads 30, 31 do not absorb electrical power from the electric plant 40.

The connected operation mode of the electric plant 40 comprises the following operation zones:

- the operation zone 65 defined by the values of the statistical indicator of absorbed electrical power <P> comprised between the null value and the value of the first contractual electric power threshold P1_ct and defined by the values of the time interval comprised between the null value and the value of the first time threshold T1_th;
- the operation zone 63 defined by the values of the statistical indicator of absorbed electrical power <P> comprised between the value of the first contractual electric power threshold P1_ct and the value of the second contractual electric power threshold P2_ct and defined by the values of the time interval comprised between the null value and the value of the first time threshold T1_th;
- the operation zone 64 defined by the values of the statistical indicator of absorbed electrical power <P> greater than the value of the second contractual electric power threshold P2_ct and defined by the values of the time interval comprised between the null value and the value of the first time threshold T1_th;
- the operation zone 66 defined by the values of the statistical indicator of absorbed electrical power <P> comprised between the null value and the value of the first contractual electric power threshold P1_ct and defined by the values of the time interval comprised between the first time threshold T1_th and the value of the second time threshold T2_th;
- the operation zone 67 defined by the values of the statistical indicator of absorbed electrical power <P> comprised between the null value and the value of the first contractual electric power threshold P1_ct and defined by the values of the time interval greater than the value of the second time threshold T2_th;
- the operation zone 62 defined by the values of the statistical indicator of absorbed electrical power <P> comprised between the value of the first contractual electric power threshold P1_ct and the value of the second contractual electric power threshold P2_ct and defined by the values of the time interval comprised between the value of the first time threshold T1_th and the value of the second time threshold T2_th.

The disconnected operation mode of the electric plant 40 comprises the following operation zones:

- the operation zone 61 defined by values of the statistical indicator of absorbed electrical power <P> greater than the value of the second contractual electric power threshold P2_ct and defined by the values of the time interval greater than the value of the first time threshold T1_th;
- the operation zone 60 defined by the values of the statistical indicator of absorbed electrical power <P> comprised between the value of the first contractual electric power threshold P1_ct and the value of the second contractual electric power threshold P2_ct and defined by the values of the time interval greater than the value of the second time threshold T2_th.

According to the invention, the processing unit 3-1 is such to generate the values of the switching signal S_sw for suitably controlling the disconnection and connection of the electrical loads 30, 31, so as to maintain the electric plant 40 operating in the connected operation mode, i.e. in the operation zones 65, 63, 64, 66, 67, 62 wherein at least one of the electrical loads 30, 31 is connected to the electric plant 40 and absorbs therefrom electrical energy.

In other words, according to the invention it is perforemd a disconnection of one or more electrical loads 30, 31 before it occurs the condition wherein the value of the statistical indicator of absorbed electrical power <P> (for example, the mean power absorbed by the electric plant 40) exceeds values correlated to the contractual electrical power for a time interval greater than the first and/or second time threshold T1_th, T2_th, as will be explained in greater detail in the following.

In particular, according to the invention it is prevented that the value of the statistical indicator of the absorbed electrical power <P> (for example the mean power absorbed by the electric plant 40) is greater than the second contractual electric power threshold P2_ct (for example, 4.2 Kw) for a time interval equal to or greater than the first time threshold T1_th (for example, 4 minutes) and it is prevented that the value of the statistical indicator of absorbed electrical power <P> (in the example, the mean power absorbed by the electric plant 40) is greater than the first contractual electric power threshold P1_ct (for example 3.3 Kw) for a time interval equal to or greater than the second time threshold T2_th (for example 180 minutes).

In greater detail, the processing unit 3-1 is configured to generate the values of the switching signal S_sw for suitable controlling the disconnection and connection of the electrical loads 30, 31, as a function of the instantaneous electrical power P_i absorbed by the electric plant 40 and as a function of the comparison between the values of the first contractual electric power threshold P1_ct, of the second contractual electric power threshold P2_ct, of the first time threshold T1_th and of the second time threshold T2_th and the following calculating parameters:

- a first statistical indicator of electrical power (denoted in the following by <P1>) absorbed by the electric plant 40 during the first excess time interval;
- a second statistical indicator of electrical power (denoted in the following by <P2>) absorbed by the electric plant 40 during a second excess time interval;
- a first intervention time interval, denoted in the following by T1_int;
- a second intervention time interval, denoted in the following by T2_int;

The first and the second statistical indicator <P1>, <P2> are for example the mean, the mode or the median of the electrical power absorbed during the first excess time interval and during the second excess time interval respectively.

The first excess time interval indicates the time interval comprised between the instant of detecting the value of the instantaneous electrical power P_i absorbed by the electric plant 40 greater than the first contractual electric power threshold P1_ct and the actual measuring instant.

Likewise, the second excess time interval indicates the time interval comprised between the instant of detecting the value of the instantaneous electrical power P_i absorbed from the electric network 40 greater than the second contractual electric power threshold P2_ct and the actual measuring instant.

The first intervention time interval T1_int indicates the time interval comprised between the instant t0 (see figure 3) wherein the value of the instantaneous electrical power absorbed P_i exceeds the first threshold value of the contractual electrical power P1_ct and the instant t4 wherein at least one of the electrical loads is disconnected from the electric plant 40.

The value of the first intervention time interval T1_int is calculated so as to be lower than the value of the second time threshold T2_th, so as to prevent the disconnection of the electric plant 40 by means of the electrical counter 41.

Likewise, the second intervention time interval T2_int indicates the time interval comprised between the instant t2 wherein the value of the instantaneous electrical power absorbed P_i exceeds the second threshold value of the contractual electrical power P2_ct and the instant t2 wherein at least one further electrical load is disconnected from the electric plant 40.

The value of the second intervention time interval T2_int is calculated so as to be lower than the value of the first time threshold T1_th, so as to prevent the disconnection of the electric plant 40 by means of the electrical counter 41.

Supposing to have two electrical loads 30, 31 connected to the electric plant 40, at instant t2 wherein the second intervention time interval T2_int terminates ii is disconnected for example the electrical load 31, while at instant t4 wherein the first intervention time interval T1_int terminates it is disconnected the electrical load 30.

The processing unit 3-1 is configured to calculate the values of the first and of the second intervention time interval T1_int, T2_int in such a way as to maintain the electric plant 40 operating in the zones 65, 63, 64, 66, 67, 62 wherein the electric plant 40 is connected to the electric power distribution network and absorbs therefrom electrical energy, thus preventing the disconnection of the electric plant 40 from the electric distribution network caused by the electrical counter 41.

The calculation of the switching signal S_sw will be explained in greater detail in the description of the flowchart of Figures 4A-4D.

With reference to Figure 3, it shows a possible trend over time in the electrical energy management system 50 of the instantaneous electrical power P_i absorbed by the electric plant 40, of the first and second statistical indicator <P1>, <P2> of electrical power absorbed by the electric plant 40, of the connected/disconnected condition S_hp of the electrical load 30 and of the connected/disconnected condition S_lp of the electrical load 31.

It is supposed that the electrical load 31 has a lower priority than the electrical load 30, as will be more fully explained in details in the following relating to the first disconnection/connection criterion of the electrical loads.

It can be observed that at the initial instant t0 the value of the instantaneous electrical power P_i has a transition from a value lower than the first threshold value of the contractual electrical power P1_ct to a value greater than the first threshold value of contractual electrical power P1_ct: in this case the first and the second electrical load 30, 31 both remain connected to the electric plant 40.

In the instants comprised between t0 and t1, the first statistical indicator of absorbed electrical power <P1> continues to have an increasing trend and thus at instant t1 the value of the instantaneous electrical power P_i has a transition from a value lower than the second threshold value of the contractual electrical power P2_ct to a value greater than the second threshold value of contractual electrical power P2_ct: in this case too the first and the second electrical load 30, 31 both remain connected to the electric plant 40.

Thereafter, at instant t2 the second electrical load 31 having a lower priority is disconnected from the electric plant 40 and thus the value of the instantaneous electrical power P_i has a transition from a value greater than the second threshold value of the contractual electrical power P2_ct to a value lower than the second threshold value of contractual electrical power P2_ct.

Thereafter, at instant t4 also the first electrical load 30 having a higher priority is disconnected from the electric plant 40 and thus the value of the instantaneous electrical power P_i has a transition from a value higher than the first threshold value of the contractual electrical power P1_ct to a value lower than the first threshold value of contractual electrical power P1_ct.

Thereafter, at instant t6 the first electrical load 30 having the higher priority is connected to the electric plant 40, while the second electrical load 31 remains disconnected from the electric plant 40.

Therefore Figure 3 shows that the electronic control device 1 (in particular, the control unit 3, still more in particular the processing unit 3-1) has performed the selective disconnection of the electrical loads 30, 31 and subsequently has performed the reconnection of only the electrical load 30 having a higher priority in case wherein suitable conditions occur: in this way it is avoided the disconnection (by means of the electronic counter 41) of the whole electric plant 40 from the distribution network and moreover it is minimised the time interval during which the first electrical load 30 having greater priority has been disconnected from the electric plant 40.

With reference to Figures 4A-4D, they show the flowchart 100 of the method for controlling the electrical energy delivered to an electric plant 40 according to a first embodiment of the invention which corresponds to the first operation mode.

The control method of the electrical energy delivered in the first embodiment is an algorithm which is executed in the control unit 3 (in particular in the processing unit 3-1), by means of an appropriate software program run for example on a microprocessor.

In particular, the control method of the delivered electrical energy in the first embodiment is excuted periodically in the control unit 3 with a period that is for example one second.

In other words, the value of the instantaneous electrical power P_i is periodically controlled with the aim of verifying whether it is necessary to perform the disconnection of one of the electrical loads 30, 31 for preventing an overload condition from occurring, or for verifying whether it is possible to perform the reconnection of one of the electrical loads 30, 31 previously disconnected due to the possible overload.

The flowchart 100 begins with step 101.

From step 101 it proceeds to step 102 wherein it is verified whether the value of the instantaneous electrical power P_i is greater than the value of the first contractual electric power threshold P1_ct, or it is verified whether the value of the first contractual electric power threshold P1_ct has been previously exceeded.

In case wherein the value of the instantaneous electrical power P_i is greater than the value of the first contractual electric power threshold P1_ct, or if the value of the first contractual electric power threshold P1_ct has been previously exceeded, from step 102 it proceeds to step 103.

Instead, in case wherein the value of the instantaneous electrical power P_i is lower than (or equal to) the value of the first contractual electric power threshold P1_ct and also the value of the first contractual electric power threshold P1_ct has not been previously exceeded, from step 102 it proceeds to step 104 wherein the flowchart 100 terminates.

Preferably, in step 102 said verification that the first contractual electric power threshold P1_ct has been previously exceeded is implemented by means of the use of a first flag F1_P internally of the control unit 3.

In particular, the value of the first flag F1_P is assigned equal to one when it is detected that the value of the instantaneous electrical power P_i is greater than the value of the first contractual electric power threshold P1_ct.

The valued of first flag F1_P is instead assigned equal to zero when it is detected that the instantaneous electrical power P_i is lower than (or equal to) the value of the first contractual electric power threshold P1_ct for a time interval greater than the value of the second time threshold T2_th (see following step 119): therefore the first flag F2_P has a value of zero to indicate that the value of the first contractual electric power threshold P1_ct has not been exceeded.

In step 103 the first excess time interval is measured, indicating the time interval comprised between the instant of detecting the value of the instantaneous electrical power P_i greater than the value of the first contractual electric power threshold P1_ct and the actual measuring instant.

Further, in step 103 a measurement is made of the first statistical indicator of absorbed electrical power <P1> as a function of the electrical power absorbed by the electric plant 40 during the first excess time interval.

Lastly, in step 103 the value of the first flag $F1\_P$ is assigned equal to one to indicate that the value of the first contractual electric power threshold $P1\_ct$ has been exceeded.

From step 103 it continues to step 105 wherein it is performed a calculation of the first intervention time interval $T1\_int$.

From step 105 it continues to step 106 wherein it is verified whether the value of the instantaneous electrical power $P\_i$ is greater than the value of the second contractual electric power threshold $P2\_ct$, or it is verified whether the value of the second contractual electric power threshold $P2\_ct$ has been previously exceeded.

In case wherein the value of the instantaneous electrical power $P\_i$ is greater than the value of the second contractual electric power threshold $P2\_ct$, or if the value of the second contractual electric power threshold $P2\_ct$ has been previously exceeded, from step 106 it continues to step 107.

Instead, in case wherein the value of the instantaneous electrical power $P\_i$ is lower than (or equal to) the value of the second contractual electric power threshold $P2\_ct$ and also the value of the second contractual electric power threshold $P2\_ct$ has not been previously exceeded, from step 106 it continues to step 115.

Preferably, said verification that the second contractual electric power threshold $P2\_ct$ has been previously exceeded is implemented by means of the use of a second flag $F2\_P$ internally of the control unit 3.

In particular, the second flag $F2\_P$ is assigned the value of one when it is detected that the value of the instantaneous electrical power $P\_i$ is greater than the value of the second contractual electric power threshold $P2\_ct$.

The second flag $F2\_P$ is assigned at a value of zero when it is detected that the instantaneous electrical power $P\_i$ is lower than (or equal to) the value of the second contractual electric power threshold $P2\_ct$ for a time interval greater than the value of the first time threshold $T1\_th$ (see following step 113): therefore the second flag $F2\_P$ has a value of zero to indicate that the value of the second contractual electric power threshold $P2\_ct$ has not been exceeded.

In step 107 the second excess time interval is measured, indicating the time interval comprised between the instant of detecting the value of the instantaneous electrical power $P\_i$ greater than the value of the second contractual electric power threshold $P2\_ct$ and the actual measuring instant.

Further, in step 107 it is calculated the second statistical indicator of absorbed electrical power <P2> as a function of the electrical power absorbed by the electric plant 40 during the second excess time interval.

Lastly, in step 107 the value of the first flag $F2\_P$ is assigned the value of one to indicate that the value of the second contractual electric power threshold $P2\_ct$ has been exceeded.

From step 107 it continues to step 108 wherein it is performed a calculation of the second intervention time interval $T2\_int$.

From step 108 it continues to step 109 wherein it is verified whether the value of the second statistical indicator of absorbed electrical power <P2> calculated up to the present instant is greater than the value of the second contractual electric power threshold $P2\_ct$.

Further, in step 109 it is verified whether the value of the second excess time interval is greater than the value of the second intervention time interval $T2\_int$.

Lastly, in step 109 it is verified whether the disconnection of at least one of the electrical loads 30, 31 from the electric plant 40 has not taken place.

In case wherein the value of the second statistical indicator of absorbed electrical power <P2> is greater than the value of the second contractual electric power threshold $P2\_ct$, and also the value of the second excess time interval is greater than the value of the second intervention time interval $T2\_int$ and further the disconnection of at least one load 30, 31 has not taken place, from step 109 it continues to step 110.

Instead, in case wherein the value of the second statistical indicator of absorbed electrical power <P2> is lower than the value of the second contractual electric power threshold $P2\_ct$, or if the value of the second excess time interval is lower than the value of the second intervention time interval $T2\_int$, or if the disconnection of at least one electrical load 30, 31 from the electric plant 40 has taken place, from step 109 it continues to step 111.

In step 110 it is performed the disconnection of at least one electrical load 30, 31 from the electric plant 40, according to various possible criteria which will be illustrated in detail in the following.

Preferably, in step 110 before disconnecting the load, the acoustic signalling unit emits an acoustic signal indicating that the value of the second statistical indicator of electrical power absorbed <P2> has exceeded the value of the second contractual electric power threshold $P2\_ct$.

Preferably, in step 110 before the disconnection of the load, the acoustic signalling unit emits an acoustic or visual signal indicating that the value of the second statistical indicator of electrical power absorbed <P2> has exceeded the value of the second contractual electric power threshold $P2\_ct$.

In step 111 it is verified whether the value of the second excess time interval is greater than the value of the first time threshold $T1\_th$:

- in the positive case (i.e. the value of the second excess time interval is greater than the value of the first time threshold T1_th), it continues to step 112;

- in the negative case (i.e. the value of the second excess time interval is lower than or equal to the value of the first time threshold T1_th), it continues to step 115.

In step 112 the value of the second statistical indicator of absorbed electrical power <P2> is set to zero.

From step 112 it continues to step 113 wherein the value of the second flag F2_P is assigned value zero to indicate that the value of the second contractual electric power threshold P2_ct has not been exceeded.

From step 113 it continues to step 114 wherein an attempt at connecting at least one electrical load is performed.

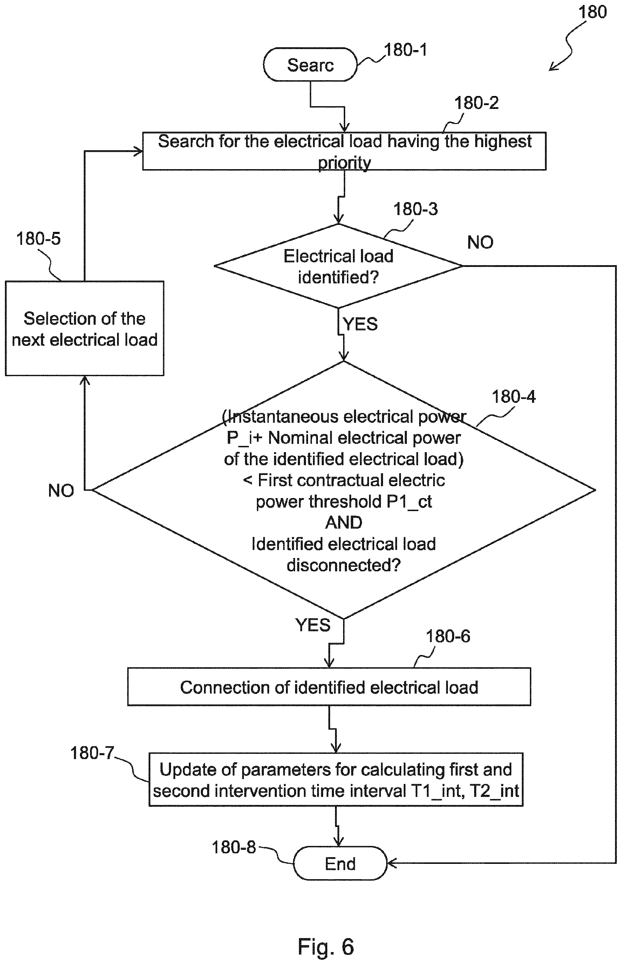

In other words, in step 114 it is first verified whether it is possible to connect at least one of the electrical loads 30, 31 to the electric plant 40, by means of the evaluation of the instantaneous electrical power P_i, of the nominal electrical power of the electrical loads 30, 31 and of the value of the first contractual electric power threshold P1_ct; in case wherein said evaluation has a positive outcome, connection of at least one of the electrical loads 30, 31 takes place, as will be explained in greater detail in the following description of the flowchart 180 of Figure 6 relating to the use of the priority criterion.

From step 114 it proceeds to step 115 wherein it is verified whether the value of the first statistical indicator of absorbed electrical power <P1> calculated up to the present instant is greater than the value of the first contractual electric power threshold P1_ct.

Further, in step 115 it is verified whether the value of the first excess time interval is greater than the value of the first intervention time interval T1_int.

Lastly, in step 115 it is verified whether the disconnection of at least one of the electrical loads 30, 31 from the electric plant 40 has not taken place.

In case wherein the value of the first statistical indicator of electrical power absorbed <P1> is greater than the value of the first contractual electric power threshold P1_ct and also the value of the first excess time interval is greater than the value of the first intervention time interval T1_int and further the disconnection of at least one load 30, 31 has not taken place, from step 115 it continues to step 116.

Instead, in case wherein the value of the first statistical indicator of absorbed electrical power <P1> is lower than (or equal to) the value of the first contractual electric power threshold P1_ct, or if the value of the first excess time interval is lower than the value of the first intervention time interval T1_int, or if disconnection of at least one electrical load 30, 31 from the electric plant 40 has taken place, from step 115 it continues to step 117.

In step 116 it is performed the disconnection of at least one electrical load 30, 31 from the electric plant 40, according to various possible criteria which will be illustrated in detail in the following.

Preferably, in step 116 before disconnecting the load, the acoustic signalling unit emits an acoustic signal indicating that the value of the first statistical indicator of electrical power absorbed <P1> has exceeded the value of the first contractual electric power threshold P1_ct.

Preferably, in step 116 disconnecting the load, the external acoustic signalling unit emits an acoustic signal indicating that the value of the first statistical indicator of electrical power absorbed <P1> has exceeded the value of the first contractual electric power threshold P1_ct.

It is observed that step 115 is similar to step 109, with the difference that it is taken into account the first statistical indicator of absorbed electrical power <P1>, the first contractual electric power threshold P1_ct, the first excess time interval, the first intervention time interval T1_int in place of the second statistical indicator of electrical power absorbed <P2>, of the second contractual electric power threshold P2_ct, of the value of the second excess time interval, of the second intervention time interval T2_int respectively.

In step 117 it is verified whether the value of the first excess time interval is greater than the value of the second time threshold T2_th:

- in the positive case (i.e. the value of the first excess time interval is greater than the value of the second time threshold T2_th), it continues to step 118;
- in the negative case (i.e. the value of the first excess time interval is lower than or equal to the value of the second time threshold T2_th), it continues to step 121 wherein the flowchart 100 terminates.

The transition from step 117 to step 118 means that it is not possible that it occurs the disconnection of the electric plant 40 by means of the electrical counter 41; therefore in step 118 the value of the first statistical indicator of electrical power absorbed <P1> is set to zero.

Further, from step 118 it proceeds to step 119 wherein the value of the first flag F1_P is assigned equal to zero to indicate that the value of the first contractual electric power threshold P1_ct has not been exceeded.

From step 119 it continues to step 120 wherein it is perforemd an attempt of connecting at least one electrical load.

In other words, in step 120 it is first verified (like at step 114) whether it is possible to connect at least one of the electrical loads 30, 31 to the electric plant 40, by means of the evaluation of the instantaneous electrical power P_i, of the nominal electrical power of the electrical loads 30, 31 and of the value of the first contractual electric power threshold P1_ct; in case wherein said evaluation has a positive outcome, it is performed the connection of at least one of the electrical loads 30, 31, as will be explained in greater detail in the following description of the flowchart 180 of Figure 6 relating to the use of the priority criterion.

From step 120 it proceeds to step 121 wherein the flowchart 100 terminates.

The disconnection of at least one electrical load 30, 31 from the electric plant 40 (steps 111 and 116), as well as the possible connection of at least one electrical load 30, 31 to the electric plant 40 (steps 114 and 120), can be performed according to various possible criteria.

A first disconnection/connection criterion of the electrical loads takes into account a priority assigned to the electrical loads switchably connected to the electric plant 40.

For example, it is assigned to each one of the electrical loads a value of a positive integer number representing the priority, wherein the increasing priority is represented by increasing values of said integer number.

According to the priority criterion, it is used a disconnection sequence of the electrical loads so as to disconnect in succession the electrical load having the lowest priority with respect to all the other electrical loads currently connected to the electric plant 40.

Viceversa, according to the priority criterion, it is used a connection sequence of the electrical loads so as to connect in succession the electrical load having the highest priority with respect to all the other electrical loads currently disconnected from the electric plant 40.

In general, a plurality of electrical loads are electrically switchably connected to the electric plant 40 and a different priority is assigned to each one of the electrical loads, with increasing or decreasing values.

For example, a first electrical load has a priority p1, a second electrical load has a second priority p2 greater than p1, a third electrical load has a third priority p3> p2, etc.

For the purposes of the explanation of the first criterion, for the sake of simplicity two electrical loads 30, 31 are considered, having different priorities, wherein the electrical load 30 has a high priority p1 and the electrical load 31 has a low priority p2, i.e. p1> p2.

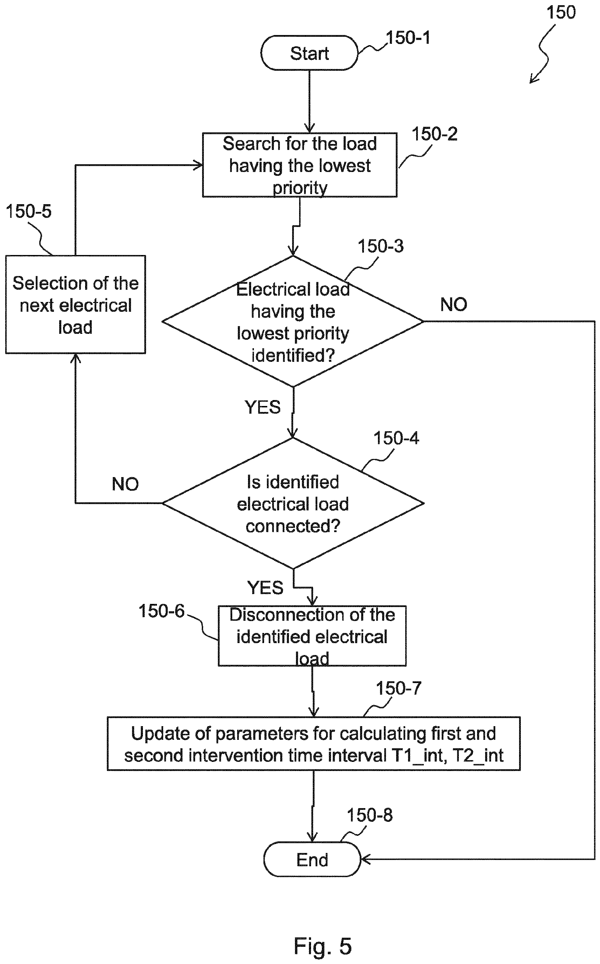

With reference to Figure 5, it shows the flowchart 150 of the first disconnection criterion of the electrical loads from the electric plant 40, based on the priority.

For example, two electrical loads 30, 31 are present, wherein the electrical load 30 has a high priority p1 and the electrical load 31 has a low priority p2 (p2<p1).

The basic idea of the first disconnection criterion based on the priority is to disconnect first the electrical load having the lower priority or the electrical loads having the lower priority (provided that they are currently connected to the electric plant 40), independently on the value of the nominal electrical power associated to the electrical loads.

Therefore the flowchart 150 of Figure 5 is a possible implementation of steps 110 and 116 of the method 100 for controlling the electrical energy, i.e. it is a possible implementation of the disconnection method of the electrical loads 30, 31 based on the priority.

The flowchart begins at 150 with step 150-1.

From step 150-1 it continues to step 150-2 wherein it is performed a search for the electrical load (among those currently connected) having the lowest priority.

From step 150-2 it continues to step 150-3 wherein it is verified whether the electrical load having the lowest priority has been identified:

- in the positive case, it continues to step 150-4;
- in the negative case, it continues to step 150-8 wherein the flowchart 150 terminates.

In step 150-4 it is verified whether the identified load (i.e. the load having the lowest priority) is connected:

- in the positive case, it continues to step 150-6;
- in the negative case, it continues to step 150-5.

For example, supposing to use two electrical loads 30, 31 having a high and a low priority respectively and supposing to start from the condition wherein both electrical loads 30, 31 are connected to the electric plant 40, in step 150-2 it is searched which one of the electrical loads 30, 31 has the lower priority and in step 150-3 it is identified the electrical load 31 having the lower priority.

In step 150-5, the next electrical load is selected and a return to step 150-2 is performed.

In step 150-6 it is performed the disconnection of the identified electrical load, i.e. the load having the lowest priority.

In the above-indicated example of two connected electrical loads 30, 31 having high and low priority respectively, when the flowchart 150 is executed for the first time, in steps 150-2, 150-3 the electrical load 31 having low priority is identified and disconnected; subsequently, when the flowchart 150 is executed for the second time, in steps 150-2 and 150-3 the electrical load 30 having high priority is identified and disconnected (because the electrical load 30 is the one having the lower priority during the second execution) and thus both the electrical loads 30, 31 have been disconnected from the electric plant 40.

From step 150-6 it proceeds to step 150-7 it is performed the update of the enabling parameters a1, a2 associated to the high-priority electrical load 30 and to the low-priority electrical load 31 respectively, wherein said enabling parameters a1, a2 are used for calculating the first intervention time interval T1_int at step 105 of the flowchart 100 and for the calculation of the second intervention time interval T2_int at step 108, as will be explained in greater detail in the following.

From step 150-7 it continues to step 150-8 wherein the flowchart 150 terminates.

The preceding observations are applicable in a similar way in the case that a plurality of electrical loads 30, 31, 32, 33... is present having decreasing priorities.

In particular, supposing that the last disconnected load is the electrical load 33 and that the electrical loads 30, 31, 32 are connected, when the flowchart 150 is executed again, it is disconnected the electrical load 32 having priority lower than the electrical loads 30, 31; subsequently, when the flowchart 150 is executed again, it is disconnected the electrical load 31 having priority lower than the electrical load 30, and so on up to the possible disconnection of the electrical load 30.

With reference to Figures 6A-6B, they show the flowchart 180 of the first criterion based on the priority for evaluating and possibly performing the connection of the electrical loads 30, 31 to the electric plant 40.

In other words, it is first verified whether it is possible to connect at least one of the electrical loads 30, 31 to the electric plant 40, on the basis of the evaluation of the instantaneous electrical power P_i, of the nominal electrical power of the electrical loads 30, 31 of the value of the first contractual electric power threshold P1_ct and of the priority associated to the electrical loads 30, 31; in case wherein said evaluation has a positive outcome, it is performed the connection of at least one of the electrical loads 30, 31.

Let's consider again the case wherein the electrical load 30 has a high priority p1 and the electrical load 31 has a low priority p2 (p2<p1).

The basic idea of the first connection criterion based on priority is first to connect the electrical load having the higher priority, independently on the value of the nominal electrical power associated to the electrical loads.

Therefore the flowchart 180 of Figures 6A-6B is a possible implementation of steps 114 and 120 of the method 100 for controlling the electrical energy, i.e. it is a possible implementation of the disconnection method of the electrical loads 30, 31 based on the priority.

Flowchart 180 begins with step 180-1.

From step 180-1 it continues to step 180-2 wherein it is performed a search for the electrical load (among those currently disconnected) having the highest priority.

From step 180-2 it continues to step 180-3 wherein it is verified whether the electrical load having the highest priority has been identified:

- in the positive case, it proceeds to step 180-4;
- in the negative case, it proceeds to step 180-8 wherein the flowchart 180 terminates.

In step 180-4 it is verified whether the sum of the instantaneous electrical power P_i absorbed by the electric plant 40 and of the nominal electrical power of the identified electrical load (i.e. the one having highest priority) is lower than the first contractual electric power threshold P1_ct.

Further, in step 180-4 it is verified whether the identified electrical load (i.e. the load having the higher priority) is disconnected from the electric plant 40.

In case wherein the value of the sum of the instantaneous electrical power absorbed P_i and of the electrical power of the identified electrical load is lower than the value of the first contractual electric power threshold P1_ct and further the identified electrical load is disconnected, from step 180-4 it continues to step 180-6.

Instead, in case wherein the value of the sum of the instantaneous electrical power absorbed P_i and of the electrical power of the identified electrical load is greater than the value of the first contractual electric power threshold P1_ct, or if the identified electrical load is connected to the electric plant 40, from step 180-4 it continues to step 180-5.

In step 180-5, the next electrical load is selected and a return to step 180-2 is performed.

In step 180-6 it is performed the connection to the electric plant 40 of the identified electrical load.

From step 180-6 it proceeds to step 180-7 wherein it is performed an updat of the parameters for the calculation of the first and second intervention time interval T1_int, T2_int.

From step 180-7 it continues to step 180-8 wherein the flowchart 180 terminates.

For example, let's suppose again that two electrical loads 30, 31 are used having high and low priority respectively, wherein both are disconnected from the electric plant 40.

When the flowchart 180 is executed for the first time, in steps 180-2, 180-3 the electrical load 30 having high priority is identified, in step 180-4 it is supposed that the outcome is positive and in step 180-6 the connection of the high-priority electrical load 30 isperformed;subsequently, when the flowchart 180 is executed for the second time, in steps 180-2, 180-3 it is identified the electrical load 31 having low priority (because the electrical load 31 is the one having the higher priority during the second execution), in step 180-4 it is supposed again that the outcome is positive and in step 180-6 it is performed the connection of the low-priority electrical load 31, thus both electrical loads 30, 31 have been reconnected to the electric plant 40.

A second disconnection/connection criterion of the electrical loads takes into account the nominal electrical power associated to the electrical loads switchably connected to the electric plant 40.

In this case the basic idea of the second disconnection criterion based on the power is that of disconnecting one or more electrical loads (provided that they are currently connected to the electric plant 40) so as to optimise the total electrical power absorbed by the electrical loads connected: in this way situations can occur wherein it is reduced (with respect to the first criterion based on the priority) the number of electrical loads that it is necessary to disconnect from the electric plant 40 in order to avoid the overload condition.

In other words, it is calculated the total nominal electrical power absorbed by a plurality of sub-groups of the electrical loads currently connected to the electric plant 40 and it is selected the sub-group of the loads having total nominal absorbed electrical power lower than the first or second contractual electric power threshold P1_ct, P2_ct and which at the same time minimises the number of electrical loads connectable to the electric plant 40.

Advantageously, in case of using the first loads disconnection/connection criterion based on the priority, the value of the first intervention time interval T1_int is dynamicallychanged, as a function of the nominal power of the electrical loads and as a function of the priority values thereof.

In particular, in step 105 of the flowchart 100 it is performed a calculation of the first intervention time interval T1_int using a formula which takes into account the values of the first contractual electric power threshold P1_ct, of the total electrical power P_tot of a plurality of electrical loads currently connected to the electric plant 40 and of the first statistical indicator of electrical power <P1>.

In particular, the first intervention time interval T1_int is calculated with the following formula (1):

$$T1\_int= K2*[P1\_ct- (<P1>- P\_tot)]/(P\_tot+1) \qquad (1)$$

wherein K2 is a constant value depending on the value of the second time threshold T2_th.

Therefore the first intervention time interval T1_int has a smaller value in case wherein the difference between the first statistical indicator of electrical power <P1> and the first contractual electric power threshold P1_ct is high, while it has a higher value in case wherein the difference between the first statistical indicator <P1> and the first contractual electric power threshold P1_ct is small.

The value of the total electrical power P_tot of the electrical loads is calculated taking into account the nominal electrical power P1_nom, P2_nom, P3_nom ..., Pn_nom of each one of the plurality of electrical loads currently connected to the electric network 40 and taking into account respective enabling parameters $a_1$, $a_2$, $a_3$, ... $a_n$ associated to the first, second, third, ... n-th electrical load respectively of the plurality, according to the following formula (2):

$$P\_tot= a_1*P1\_nom+ a_2*P2\_nom+ a_3*P3\_nom+ \ldots + a_n*Pn\_nom \qquad (2)$$

Each one of the enabling parameters a1, a2, a3, ... $a_n$ can assume a value equal to 0 or 1.

When the i-th enabling parameter $a_i$ associated to the i-th electrical load is 0, the corresponding i-th contribution Pi_nom of the nominal power of the i-the electrical load is not considered in the calculation of the total electrical power P_tot on the basis of formula (2); when instead the i-th enabling parameter $a_i$ is 1, the corresponding i-th electrical load is considered in the calculation of the total electrical power P_tot on the basis of the formula (2).

In particular, the plurality n of the enabling parameters $a_1$, $a_2$, $a_3$, ... $a_n$ is calculated according to the values of the priorities associated to the respective plurality n of the electrical loads and the current value of the enabling parameters $a_1$, $a_2$, $a_3$, ... $a_n$ is calculated on the basis of the following rule:

- value 1 is assigned to the enabling parameter associated to the electrical load currently connected to the electric plant 40 and having lowest priority (i.e. the electrical load which will be disconnected first);
- value 0 is assigned to the enabling parameters associated to the remaining electrical loads having highest priority.

Subsequently, the load having lowest priority is disconnected and it is taken into account the electrical load currently connected to the electric plant 40 and having the next lowest priority with respect to all the other electrical loads currently connected and then the above-described rule is repeated for the calculation of the new value of the first intervention time interval T1_int.

In this way, following each disconnection/connection of an electrical load the value of the total electrical power P_tot is recalculated and then the value of the first intervention time interval T1_int is recalculated, which thus changes dynamically during the operation of the system 50.

Let's consider for example that three electrical loads 30, 31 and 32 are present, wherein the electrical load 30 has maximum priority, the electrical load 32 has minimum priority and the electrical load 31 has intermediate priority comprised between the minimum priority and the maximum priority.

In the following $a_1$ will be used to denote the enabling parameter associated to the electrical load 30 having the maximum priority, $a_2$ will denote the enabling parameter associated to the electrical load 31 having intermediate priority and $a_3$ will denote the enabling parameter associated to the electrical load 32 having minimum priority.

In this example the following situations can occur in order of time:

- the electrical loads 30, 31, 32 are all currently connected to the electric plant 40: the enabling parameter $a_3$ associated to the electrical load 32 having minimum priority is assigned 1, while the enabling parameters $a_1$, $a_2$ associated to the electrical loads 30, 31 respectively having maximum priority and intermediate priority are assigned 0, so in the calculation of the first and the second intervention time interval T1_int, T2_int only the contribution of the nominal electrical power of the electrical load 32 having minimum priority is considered;

- subsequently it is performed (step 110 of the flowchart 100) the disconnection of the electrical load 32 having minimum priority and it is maintained the connection of the electrical loads 30, 31 having maximum and intermediate priority: the enabling parameter $a_2$ associated to the electrical load 31 having intermediate priority is assigned 1, while the enabling parameter a1 associated to the electrical load 30 having maximum priority is assigned 0, so in the calculation of the first and the second intervention time interval T1_int, T2_int only the contribution of the nominal electrical power of the electrical load 31 having intermediate priority is considered (note that the contribution of the nominal electrical power of the electrical load 32 having minimum priority is not taken into consideration, because the electrical load 32 has been previously disconnected);

- subsequently it is performed (step 110) the disconnection also of the electrical load 31 having intermediate priority and it is maintained the connection of the electrical load 30 having maximum priority: the enabling parameter $a_1$ associated to the electrical load 30 having highest priority is assigned 1, so in the calculation of the first and the second intervention time interval T1_int, T2_int only the contribution of the nominal electrical power of the electrical load 30 having highest priority is considered (note that the contribution of the nominal electrical power of the electrical loads 31,32 having intermediate and lowest priority are not taken into consideration, because the electrical loads 31,32 have been previously disconnected).

The above considerations relating to the calculation of the first intervention time interval T1_int are applicable in a similar way to the calculation of the second intervention time interval T2_int, which is thus also dynamically changed, as a function of the nominal power of the electrical loads and as a function of the priority values thereof.

In particular, the calculation of the second intervention time interval T2_int in step 108 of the flowchart 100 is performed (in the case of using the first disconnection/connection criterion of the loads based on the priority) using a formula which takes into account the values of the second contractual electric power threshold P2_ct, of the total electrical power P_tot of the plurality of electrical loads currently connected to the electric plant 40 and of the second statistical indicator of electrical power <P2>.

In this case the second intervention time interval T2_int is calculated using the following formula (3):

$$T2\_int = K1*[P2\_ct - (<P2> - P\_tot)]/(P\_tot+1) \qquad (3)$$

wherein K1 is a constant value that depends on the value of the first time threshold T1_th and wherein the value of the total electrical power P_tot is calculated as above illustrated.

Preferably, the electrical energy management system 50 is such to operate according to the following possible modes:

- a first operation mode, wherein it is reduced the number of interruptions (blackouts) of electrical energy towards the electric plant 40;
- a second operation mode, wherein it is taken into account a maximum value of absorbed power which depends on the time period and/or periods during the week, such as for example the daytime or night-time hours or at a determined time;
- a third operation mode, wherein the self-consumption is maximised;

- a fourth operation mode, wherein a scheduling at fixed times and/or calendar-based scheduling is set;
- a fifth operation mode which will be indicated in the following as the "electricity market".

Note that the control of the reduction of the number of interruptions of electrical energy of the first operation mode is also present in the second, third, fourth and fifth operation modes.

In the first operation mode the connection/disconnection of the electrical loads towards/from the electric plant 40 takes place using the first priority criterion.

In the second and third operation modes the connection/disconnection of the electrical loads towards/from the electric plant 40 takes place using the first priority criterion or the second criterion of the absorbed electrical power.

In the third operation mode the electronic device 1 is configured to optimise the energetic self-consumption of a domestic/industrial user, for example by connecting the electrical loads to the domestic/industrial electric plant, in case wherein it is possible to havea surplus of electrical energy in determined time bands and/or periods of the week: this is possible for example when the domestic/industrial user is combined with a photovoltaic plant connected to the electric plant 40.

It will be described in the following the operation of the electrical energy management system 50, with reference also to Gigures 1, 2, 3, 4A-4C.

For the purposes of the explanation of the invention the following hypotheses are considered:

- the electric plant 40 comprises two electrical loads, in particular the high-priority electrical load 30 and the low-priority electrical load 31;
- T1_th= 4 minutes and T2_th= 180 minutes;
- P1_ct= 3.3 Kw, P2_ct= 4.2 Kw;
- the first and the second statistical indicator of electrical power absorbed <P1>, <P2> are the first and second absorbed mean electrical power;
- the disconnection criterion based on the priority is used.

In the instants preceding t0 the electrical loads 30, 31 are both connected to the electric plant 40, which operates in the zone 65.

At the initial instant t0 the value of the instantaneous electrical power P_i has a transition from a value lower than the first threshold value of the contractual electrical power P1_ct to a value greater than the first threshold value of contractual electrical power P1_ct, which corresponds to the transition of the step 102 to 103 of the flowchart 100; the processing unit 3-1 generates the switching signal having values which maintain the first and the second electrical load 30, 31 both connected to the electric plant 40, which now operates in the zone 63.

At instant t0 the processing unit 3-1 also starts the measurement of the first excess time interval (step 103) and starts the calculation of the first absorbed mean power <P1>.

At instant t0 the processing unit 3-1 starts the calculation of the first intervention time interval T1_int (step 105).

In the instants comprised between t0 and t1, the first absorbed mean power <P1> continues to have an increasing trend: the processing unit 3-1 generates the switching signal having values maintaining the first and the second electrical load 30, 31 both connected to the electric plant 40, which continues to operate in the zone 63.

At instant t1 the value of the instantaneous electrical power P_i has a transition from a value lower than the second threshold value of the contractual electrical power P2_ct to a value greater than the second threshold value of contractual electrical power P2_ct which corresponds to the transition of step 106 to 107; in this case too the processing unit 3-1 generates the switching signal having values which maintain the first and the second electrical load 30, 31 both connected to the electric plant 40, which now operates in the zone 64.

At instant t1 the processing unit 3-1 also starts the measurement of the second excess time interval (step 107) and starts the calculation of the second absorbed mean power <P2>.

At instant t1 the processing unit 3-1 starts the calculation of the second intervention time interval T2_int (step 108).

In the instants comprised between t1 and t2, the second absorbed mean power <P2> continues to have a substantially increasing trend: the processing unit 3-1 generates the switching signal having values which maintain the first and the second electrical load 30, 31 both connected to the electric plant 40, which continues to operates in the zone 64.

At instant t2 the processing unit 3-1 detects that the value of the second mean power <P2> is greater than the value of the second contractual electric power threshold P2_ct and further detects that the value of the second intervention time interval is greater than the second intervention time interval T2_int (step 109 and transition from step 109 to 110): therefore at instant t2 the processing unit 3-1 generates the switching signal S_sw having suitable values which disconnects the low-priority electrical load 31 from the electric plant 40 (step 110) and thus the instantaneous electrical power P_i has a transition from a value greater than the second contractual electric power threshold P2_ct to a value lower than the second contractual electric power threshold P2_ct.

In particular, at instant t2 the processing unit 3-1 executes the flowchart 150 of Figure 5 relating to the first disconnection criterion of the electrical loads based on the priority, wherein steps 150-1, 150-2, 150-3, 150-4, 150-6, 150-7, 150-8 are executed.

In steps 150-2, 150-3, 150-4 the processing unit 3-1 identifies the low-priority electrical load 31 and generates (step 150-6) the switching signal S_sw having suitable values that disconnect the low-priority electrical load 31 from the electric plant 40.

In the instants comprised between t2 and t3 the first and the second absorbed mean power <P1>, <P2> have a substantially decreasing trend, while the instantaneous electrical power P_i has values comprised between the first contractual electric power threshold P1_ct and the second contractual electric power threshold P2_ct: in fact the low-priority electrical load 31 has been disconnected and currently only the high-priority electrical load 30 is connected: therefore the electric plant 40 has now returned to operate in the zone 63.

At instant t3 the processing unit 3-1 detects that the value of the second excess time interval is greater than the value of the first time threshold T1_th (step 111 and transition from step 111 to 112).

The processing unit 3-1 sets to zero the value of the second absorbed mean power <P2> (step 112).

Further, the processing unit 3-1 assigns zero to the value of the second flag F2_P to indicate that the value of the second contractual electric power threshold P2_ct has not been exceeded.

Further, at instant t3 the processing unit 3-1 executes the flowchart 180 of Figure 6 relating to the attempt at connection of the low-priority electrical load 31 (step 114).

In particular, the processing unit 3-1 executes steps 180-1, 180-2, 180-3 and identifies that the low-priority electrical load 31 is the one having the highest priority among the electrical loads currently disconnected from the electric plant 40.

Further, the processing unit 3-1 executes step 180-4 and detects that the condition is not being respected, i.e. that the sum of the instantaneous electrical power and of the nominal electrical power of the low-priority electrical load 31 is greater than the first contractual electric power threshold P1_ct: consequently the processing unit 3-1 continues to generate the switching signal S_sw which maintains the low-priority electrical load 31 disconnected from the electric plant 40.

In the instants comprised between t3 and t4 the instantaneous electrical power P_i maintains values comprised between the first contractual electric power threshold P1_ct and the second contractual electric power threshold P2_ct: the low-priority electrical load 31 is disconnected, the high-priority electrical load 30 is connected and the electric plant 40 now operates in the zone 62.

At instant t4 a situation similar to that of instant t2 occurs, with the difference that the high-priority electrical load 30 is considered.

In particular, at instant t4 the processing unit 3-1 detects that the value of the first mean power <P1> is greater than the value of the first contractual electric power threshold P1_ct and further detects that the value of the first intervention time interval is greater than the first intervention time interval T2_int (step 115 and transition from step 115 to 116): therefore at instant t4 the processing unit 3-1 generates the switching signal S_sw having suitable values which disconnects also the high-priority electrical load 30 from the electric plant 40 (step 116) and thus the instantaneous electrical power P_i has a transition from a value greater than the first contractual electric power threshold P1_ct to a value lower than the first contractual electric power threshold P1_ct.

In particular, at instant t4 the processing unit 3-1 executes the flowchart 150 of Figure 5 relating to the first disconnection criterion of the electrical loads based on the priority, wherein steps 150-1, 150-2, 150-3, 150-4, 150-6, 150-7, 150-8 are executed.

In steps 150-2, 150-3, 150-4 the processing unit 3-1 identifies the high-priority electrical load 30 and generates (step 150-6) the switching signal S_sw having suitable values that disconnects the high-priority electrical load 30 from the electric plant 40.

In the instants comprised between t4 and t5 the first and the second absorbed mean power <P1>, <P2> have a substantially decreasing trend and the instantaneous electrical power P_i has values lower than the first contractual electric power threshold P1_ct: in fact both the low-priority electrical load 31 and the high-priority electrical load 30 are currently disconnected, so that the electric plant 40 operates in the zone 66.

At instant t5 a situation similar to the one of instant t3 occurs.

In particular, at instant t5 the processing unit 3-1 detects that the value of the first excess time interval is greater than the value of the second time threshold T2_th (step 117 and transition from step 117 to 118).

The processing unit 3-1 sets to zero the value of the first absorbed mean power <P1> (step 118).

Further the processing unit 3-1 assigns zero to the value of the first flag F1_P to indicate that the value of the first contractual electric power threshold P1_ct has not been exceeded.

Further, at instant t5 the processing unit 3-1 executes the flowchart 180 of Figure 6 relating to the attempt of connecting the high-priority electrical load 30 (step 120).

In particular, the processing unit 3-1 executes steps 180-1, 180-2, 180-3 and identifies that the high-priority electrical load 30 is the one having the higher priority among the electrical loads 30, 31 currently disconnected from the electric plant 40.

Further, the processing unit 3-1 executes step 180-4 and detects that the condition is not being respected, i.e. that the sum of the instantaneous electrical power and of the nominal electrical power of the high-priority electrical load 30 is greater than the first contractual electric power threshold P1_ct: consequently the processing unit 3-1 continues to generate the switching signal S_sw which maintains the high-priority electrical load 30 disconnected from the electric plant 40, and additionally the low-priority electrical load 31 disconnected.

In the instants comprised between t5 and t6 the first and the second absorbed mean power <P1>, <P2> have a substantially decreasing trend and the instantaneous electrical power P_i continues to have values lower than the first contractual electric power threshold P1_ct: in fact both the low-priority electrical load 31 and the high-priority electrical load 30 are currently disconnected, so that the electric plant 40 operates in the zone 66.

At instant t6 there is a behaviour similar to instant t5, with the difference that the processing unit 3-1 executes step 180-4 and detects that the condition is being respected, i.e. that the sum of the instantaneous electrical power and of the nominal electrical power of the high-priority electrical load 30 is lower than the first contractual electric power threshold P1_ct, because the power absorbed by the high-priority electrical load 30 is reduced: consequently, the processing unit 3-1 generates the switching signal S_sw having suitable values which connects the high-priority electrical load 30 to the electric plant 40, while the low-priority electrical load 31 remains disconnected.

The electric plant 40 is then returned to operate in the zone 65.

Advantageously, the system 50 further comprises a photovoltaic plant comprising one or more photovoltaic panels and an electrical energy storage, which have the function of delivering electrical energy to the electrical loads connected to the electric plant 40.

In this case the electronic device 1 is configured to measure the quantity of electrical energy generated by the photovoltaic plant in excess with respect to demand, i.e. not absorbed by the electrical loads connected to the electric plant 40.

The control unit 3 is thus further configured to measure the electrical energy injected by the photovoltaic plant into the electric plant 40 and to generate the switching signal S_sw further taking into account the value of the measure of the electrical energy generated by the photovoltaic plant.

Further, the control unit 3 transmits a control signal to the electrical energy storage, by means of the internal transceiver of the electronic device 1.

Preferably, the electronic device 1 is further configured to transmit to a web portal data indicating the operation of the electric plant 40 and of the connected electrical loads, so that the user can remotely access said data to display them.

Advantageously, the electronic control device 1 is configured for being also usable for distribution networks of a fluid, such as for example a water network and/or a supply network of combustible gas.

Preferably, the electronic device 1 interacts for this purpose with an optical detecting unit configured to:

- optically acquiring a value of a fluid consumption from a screen of a consumption counter installed along a supply network of the fluid by means of recognition of the characters;
- sending the value of the acquired consumption to the control unit 3.

The control unit 3 of the electronic device 1 is further configured to:

- recognise the value of the consumption reconstructed by the optical detecting unit of the above-mentioned characters;
- generating the switching signal S_sw further taking into account the recognised consumption value.

Preferably, the optical detecting unit operates by means of an optical character recognition algorithm (OCR), allowing precisely and rapidly obtaining information associated to the value of a fluid consumption.

According to a second embodiment of the invention defined the "electricity market" which corresponds to the fifth operation mode, the control unit 3 performs the connection/disconnection of a plurality of electrical loads as a function of the hourly costs of the electrical energy, wherein said hourly costs are updated every day: this allows a domestic user to acquire greater electrical energy in the daytime hours wherein the electrical energy costs is cheaper and, viceversa, to buy less electrical energy in the hours of the day wherein the electrical energy is more expensive.

The "electricity market" embodiment comprises the following steps:

a) configuring a plurality of electrical loads connected switchably to the electric plant 40, wherein said configuration comprises the number of hours wherein the respective electrical load is connected in a day;
b) reading, each day, the hourly cost of electrical energy;
c) sorting the various hours of the day according to the increasing hourly cost;

d) calculating an activation planning on the following day of at least a part of the plurality of electrical loads so as to maximise the electrical power absorbed in the hours of the day wherein the hourly cost of the electrical energy is the lowest and so that at each hour of the day the total sum of the nominal power of the active electrical loads is lower than or equal to a threshold of electrical power P_th (which depends for example on the value of the contractual electrical power P_ct);

e) performing at each hour of the following day the connection or disconnection of the electrical loads to/from the electric plant 40, on the basis of the outcome of the activation planning.

Consider for example having five electrical loads 30, 31, 32, 33, 34 which can be connected appropriately to the electric plant 40.

In the configuration step a), a table is defined wherein to each one of the electrical loads 30, 31, 32, 33, 34 is associated the value of the nominal electrical power and the number of hours during which the electrical load must be active (i.e. connected to the electric plant 40), as shown in following Table 1:

Table 1

| Electrical load | Nominal electrical power [kW] | Number of activation hours [h] |
|---|---|---|
| 30 | 1.3 | 3 |
| 31 | 1.5 | 2 |
| 32 | 0.7 | 5 |
| 33 | 0.5 | 3 |
| 34 | 1.1 | 4 |

In Table 1 it can be observed that the electrical load 30 has a nominal electrical power of 1.3 kW and it is requested that it be active for 3 hours per day.

Likewise:

- the electrical load 31 has a nominal electrical power of 1.5 kW and it is requested that it be active for 2 hours per day;
- the electrical load 32 has a nominal electrical power of 0.7 kW and it is requested that it be active for 5 hours per day;
- the electrical load 33 has a nominal electrical power of 0.5 kW and it is requested that it be active for 3 hours per day;
- the electrical load 34 has a nominal electrical power of 1.1 kW and it is requested that it be active for 4 hours per day;

In step b) a table is read wherein the hourly cost is indicated (in Euro per MWh) of the electrical energy for all 24 hours of the day, as shown in following Table 2:

Table 2

| Hours | Cost [Euro/MWh] |
|---|---|
| 1 | 41 |
| 2 | 40 |
| 3 | 45 |
| 4 | 44 |
| 5 | 42 |
| 6 | 42 |
| 7 | 46 |
| 8 | 47 |
| 9 | 45 |
| 10 | 46 |
| 11 | 48 |
| 12 | 51 |

(continued)

| Hours | Cost [Euro/MWh] |
|---|---|
| 13 | 50 |
| 14 | 49 |
| 15 | 52 |
| 16 | 53 |
| 17 | 51 |
| 18 | 49 |
| 19 | 36 |
| 20 | 38 |
| 21 | 43 |
| 22 | 42 |
| 23 | 39 |
| 24 | 41 |

It can be observed in Table 2 that in the first column the hours of the day are listed in time order, i.e. from 1 to 24.

In step c) the hours of the day are ordered on the basis of the increasing hourly cost, as shown in following Table 3:

Table 3

| Hours | Cost [Euro/MWh] |
|---|---|
| 19 | 36 |
| 20 | 38 |
| 23 | 39 |
| 2 | 40 |
| 1 | 41 |
| 24 | 41 |
| 22 | 42 |
| 5 | 42 |
| 6 | 42 |
| 21 | 43 |
| 4 | 44 |
| 3 | 45 |
| 9 | 45 |
| 7 | 46 |
| 10 | 46 |
| 8 | 47 |
| 11 | 48 |
| 14 | 49 |
| 18 | 49 |
| 13 | 50 |
| 12 | 51 |

(continued)

| Hours | Cost [Euro/MWh] |
|-------|-----------------|
| 17 | 51 |
| 15 | 52 |
| 16 | 53 |

It can be observed in Table 3 that in the second column the hours of the day are listed in increasing order, from the minimum value 36 Euro/MWh to the maximum value 53 Euro/MWh; consequently, in the first column the corresponding hours of the day are no longer listed in time order.

In step d) an activation table of the electrical loads 30, 31, 32, 33, 34 is generated, which represents the hours wherein an electrical load is active (value 1) or inactive (value 0), as shown in the following Table 4:

Table 4

| | Hours | | | | | | | | | | | | | |
|------|----|----|----|---|---|----|----|---|---|----|---|---|-----|----|
| Load | 19 | 20 | 23 | 2 | 1 | 24 | 22 | 5 | 6 | 21 | 4 | 3 | ... | 16 |
| 30 | 0 | 0 | 0 | 0 | 0 | 1 | 1 | 1 | 0 | 0 | 0 | 0 | ... | 0 |
| 31 | 0 | 0 | 0 | 1 | 1 | 0 | 0 | 0 | 0 | 0 | 0 | 0 | ... | 0 |
| 32 | 1 | 1 | 1 | 1 | 1 | 0 | 0 | 0 | 0 | 0 | 0 | 0 | ... | 0 |
| 33 | 1 | 1 | 1 | 0 | 0 | 0 | 0 | 0 | 0 | 0 | 0 | 0 | ... | 0 |
| 34 | 1 | 1 | 1 | 0 | 0 | 0 | 0 | 0 | 1 | 0 | 0 | 0 | ... | 0 |

For the sake of simplicity it is supposed that the content of the columns comprised between hour 3 and the last hour, hour 16, is 0.

It can be observed in Table 4 that at hour 19 (i.e. from 18:00 hours to 18:59) the schedule includes the inactive electrical loads 30, 31 (i.e. not connected to the electric plant 40) and the active electrical loads 32, 33, 34 (i.e. connected to the electric plant 40).

Since the nominal electrical power of the electrical loads 32, 33, 34 is equal to 0.7 kW, 0.5 kW, 1.1 kW respectively (see again the previous Table 1), this means that at hour 19 the schedule includes consumption of a total nominal electrical power equal to 0.7+ 0.5+ 1.1= 2.3 kW.

Similar considerations can be made at hours 20, 23, 2, 1, 24, 22, 5, 6, 21, 4, wherein the schedule includes consuming a total nominal electrical power equal to 2.3 kW, 2.3 kW, 2.2 kW, 2.2 kW, 1.3 kW, 1.3 kW, 1.3 kW, 1.1 kW, 0.0 kW, 0.0 kW respectively.

Supposing to consider a contractual electrical power P_c= 3.3 kW and an electrical power threshold P_th equal to 70% of the contractual electrical power P_c (thus P_th= 2.3 kW), it can be observed that the value of the total nominal electrical power absorbed during each hour is lower than or equal to the value of the electrical power threshold P_th= 2.3 kW.

It can be further observed in Table 4 that the electrical load 30 is active for three hours (hours 24, 22, 5) so as to fulfill the requirements of configured activation hours as indicated in preceding Table 1.

Similar considerations can be made for the other electrical loads 31, 32, 33, 34, which are active for 2 hours, 5 hours, 3 hours, 4 hours respectively, which thus also fulfill the requirements of configured activation hours indicated in preceding Table 1.

It is lastly observed in Table 4 that the number of active loads is greater in the hours wherein the hourly cost of the electrical energy is lower.

In fact:

- in hours 19, 20, 23 (wherein the hourly cost is lower and equal to 36, 38, 39 Euro/MWh respectively) three electrical loads (32, 33, 34) are active and the absorbed electrical power is maximised in hours 19, 20, 23 (being 2.3 kW);
- in hours 2, 1 (wherein the hourly cost is greater than in preceding hours 19, 20, 23 and equal to 40, 41 Euro/MWh respectively) two electrical loads (31, 32) are active and the absorbed electrical power is maximised in hours 2, 1 (equal to 2.2 kW);
- in hours 24, 22, 5, 6 (wherein the hourly cost is greater than in preceding hours 2, 1 and equal to 41, 42, 42, 42 Euro/MWh respectively) only one electrical load (30 or 34) is active and the absorbed electrical power is maximised in hours 22, 22, 5, 6 (being 1.3 or 1.1 kW);

- in hours 21, 4, 3, 9, 7, 10, 8, 11, 14, 18, 13, 12, 17, 15, 16 (wherein the hourly cost is greater and it is comprised between 43 and 53 Euro/MWh) all the electrical loads are inactive and thus the absorbed electrical power is null.

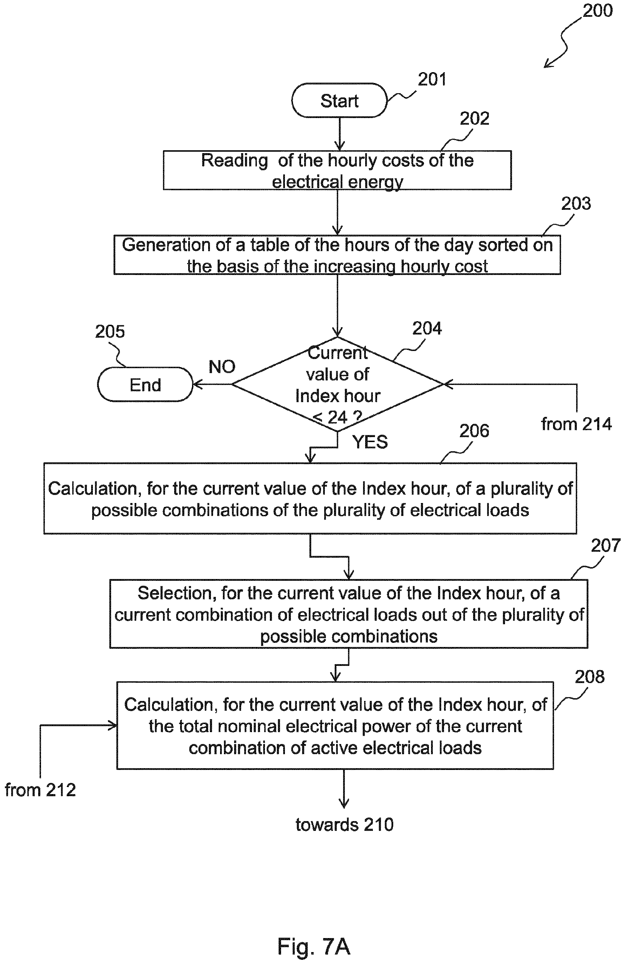

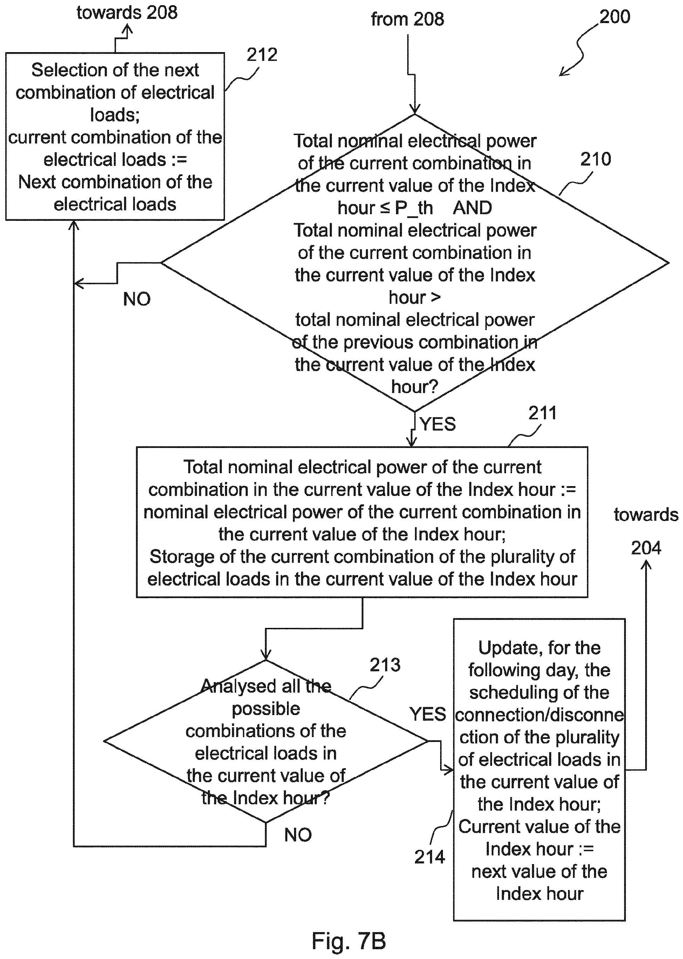

With reference to Figures 7A-7B, it shows the flowchart 200 of the method for controlling the electrical energy delivered to an electric plant 40 according to the second embodiment of the invention defined "electricity market", which corresponds to the fifth operation mode.

The method for controlling the delivered electrical energy of the second embodiment is an algorithm which is executed in the control unit 3 (in particular, in the processing unit 3-1) each day, by means of an suitable software program run for example on a microprocessor.

The flowchart 200 begins with step 201.

From step 201 it continues to step 202 wherein it is performed a reading of the hourly costs of the electrical energy, as indicated for example in preceding Table 2.

From step 202 it continues to step 203 wherein a table is generated of the hours of the day sorted on the basis of the increasing hourly cost, as indicated for example in preceding Table 3.

The flowchart 200 comprises three cycles:

- a first more external cycle composed of steps 204, 206, 207, 208, 210, 211, 213, 214, having the function of scanning all 24 hours of the day for a particular combination of electrical loads;
- a second internal cycle composed of steps 208, 210, 212, having the function of scanning the combinations of electrical loads at the hour considered with the aim of finding the combination that fulfills determined requirements of nominal electrical power;
- a third more internal cycle composed of steps 208, 210, 211, 213, 212, having the function of scanning all possible combinations of the electrical loads.

From step 203 it proceeds to step 204 wherein it is verified whether the current value of an index hour $I\_h$ is lower than 24, wherein the index hour $I\_h$ has integer values comprised between 1 and 24:

- in the positive case (i.e. $I\_h > 24$), from step 204 it proceeds to step 206;
- in the negative case, (i.e. $I\_h = 24$), from step 204 it proceeds to step 205 wherein the flowchart 200 terminates.

The index hour $I\_h$ is changed each time that it is executed the first external cycle composed of the steps 204, 206, 207, 208, 210, 211, 213, 214, till returning to the step 204; in particular, the sequence of the values of the index hour $I\_h$ is determined according to the order of increasing hourly cost.

Considering for example the order of the hourly cost illustrated in Table 3, the sequence of the values of the Index hour $I\_h$ is 19, 20, 23, 2, 1, ... 16.

In step 206 a calculation is performed, for the current value of the Index hour $I\_h$, of a plurality of possible combinations $C_1, C_2, C_3, ... C_n$ of the plurality of electrical loads.

Combinations $C_1, C_2, C_3, ... C_n$ represent all the possible combinations of activation/deactivation of the electrical loads 30, 31, 32, 33, 34, as the hours of the day ordered on the basis of the increasing hourly cost change; subsequently a suitable combination will be selected which fulfills determined requirements of nominal electrical power.

From step 206 it proceeds to step 207 wherein it is performed a selection for the current value of the Index hour $I\_h$, of a current combination of electrical loads out of the plurality of possible combinations $C_1, C_2, C_3, ... C_n$.

From step 208 it continues to step 207 wherein it is performed a calculation for the current value of the Index hour $I\_h$, of the total nominal electrical power of the current combination of active electrical loads.

In greater detail, in step 207 a calculation is performed, for the current value of the Index hour $I\_h$, of and $i$-th value of total nominal electrical power $P_{total}(i)$ associated to the active electrical loads of the current combination, wherein $i$ is an integer value representing the 24 hours of the day.

Considering for example Table 4 and considering the values of the nominal electrical power of the electrical loads 30, 31, 32, 33, 34 indicated in Table 1, for hour 19 it is calculated $P_{total}(19) = P_{32} + P_{33} + P_{34} = (0,7+0,5+1,1)$ kW = 2,3 kW, wherein $P_{32}$ denotes the nominal electrical power of the electrical load 32, $P_{33}$ the nominal electrical power of the electrical load 33 and $P_{34}$ the nominal electrical power of the electrical load 34.

From step 208 it proceeds to ttep 210 wherein it is verified whether the value of the total nominal electrical power of the current combination in the current value of the Index hour $I\_h$ is lower than or equal to the value of the electrical power threshold $P\_th$ and it is verified whether the value of the total nominal electrical power of the current combination in the current value of the Index hour $I\_h$ is greater than the value of the total nominal electrical power of the previous combination in the current value of the Index hour:

- in the positive case (i.e. the total nominal electrical power of the current combination in the current value of the Index hour I_h ≤ P_th and further the total nominal electrical power of the current combination in the current value of the Index hour I_h > total nominal electrical power of the preceding combination in the current value of the Index hour I_h), from step 21it proceeds to step 211;

- in the negative case (i.e. the total nominal electrical power of the current combination in the current value of the Index hour I_h >P_th or the total nominal electrical power of the current combination in the current value of the Index hour I_h < total nominal electrical power of the preceding combination in the current value of the Index hour I_h), from step 210 it proceeds to step 212.

Considering P_th= 2.3 kW, in step 210 it is verified whether at hour 19 the calculated value of the sum $P_{total}(19)$ of the electrical power of the active electrical loads is lower than or equal to P_th= 2.3 kW.

In this example, in step 210 it is detected that the value $P_{total}(19)$= 2.3 kW is equal to P_th= 2.3 kW and thus from step 210 it proceeds to step 211.

Similar considerations can be made when it is executed again the more external cycle composed of the steps 204, 206, 207, 208, 210, 211, 213, 214, thus for each combination of the Index hour I_h it is verified whether the sum $P_{total}(i)$ of the electrical power of the active electrical loads is lower than or equal to P_th= 2.3 kW.

In case of a combination wherein for example all the electrical loads are active, in step 210 at the considered hour it is detected that the value $P_{total}$ is greater than P_th= 2.3 kW and thus in this case from step 210 it continues to step 212.

In step 212 it is selected, for the current value of the Index hour I_h, the next combination of electrical loads and thus the current combination of the electrical loads is assigned equal to the next combination of the electrical loads.

From step 212 it returns to step 208.

Therefore the cycle composed of the steps 208, 210, 212 is repeated up to when a combination is found (for the current value of the Index hour I_h) of the plurality of electrical loads that satisfies the condition of the step 210.

For example, the cycle terminates when it is generated at the Index hour 19 the schedule shown in preceding Table 4.

In fact in this case in step 210 it is detected that at Index hour I_h =19 it is not only fulfilled the requirement of the total nominal electrical power $P_{total}(19)$≤ P_th, but also the value of the total nominal electrical power $P_{total}(19)$= (0.7+ 0.5+1,1) kW= 2.3 kW is maximum.

Similar considerations can be made when the cycle composed of steps 208, 210, 212 is again executed, thus for each combination of the Index hour I_h it is calculated the value of the i-th total nominal electrical power $P_{total}(i)$ which is lower than or equal to P_th= 2.3 kW and at the same time the value thereof is maximum, according to the following values:

- $P_{total}(20)$= 0.7+0.5+1.1= 2.3 kW;
- $P_{total}(23)$= 0.7+0.5+1.1= 2.3 kW;
- $P_{total}(2)$= 1.5+0.7= 2.2 kW;
- $P_{total}(1)$= 1.5+0.7= 2.2 kW;
- $P_{total}(24)$= 1.3 kW;
- $P_{total}(22)$= 1.3 kW;
- $P_{total}(5)$= 1.3 kW;
- $P_{total}(6)$= 1.1 kW;
- $P_{total}(21)$= 0 kW;
- $P_{total}(4)$= $P_{total}(3)$= $P_{total}(9)$= $P_{total}(7)$= $P_{total}(10)$= $P_{total}(8)$= $P_{total}(11)$= $P_{total}(14)$= $P_{total}(18)$= $P_{total}(13)$= $P_{total}(12)$= $P_{total}(17)$= $P_{total}(15)$= $P_{total}(16)$= 0 kW.

In step 211 the value of the total nominal electrical power of the current combination in the current value of the Index hour I_h is assigned equal to the value of the nominal electrical power of the current combination in the current value of the Index hour I_h, i.e. the value of the nominal electrical power of the current combination is stored in the current combination in the value of the Index hour I_h.

Moreover, in step 211 it is stored the current combination of the plurality of electrical loads 30, 31, 32, 33, 34 in the current value of the Index hour I_h, i.e. which loads are active and which loads are inactive.

In the above-considered example of Table 4, it is stored (at Index hour 19) the combination $C_3(19)$ stored wherein the electrical loads 32, 33, 34 are active, while the electrical loads 30, 31 are inactive.

From step 211 it proceeds to step 213 wherein it is verified whether all the possible combinations of the electrical loads in the current value of the Index hour I_h have been analysed:

- in the negative case, from step 213 it returns to step 212;

- in the positive case, from step 213 it proceeds to step 214.

In step 214 it is updated, for the following day, the scheduling of the connection/disconnection of the plurality of electrical loads 30, 31, 32, 33, 34 in the current value of the Index hour I_h.

It is observed that in case wherein the electrical load has already been programmed for a determined number of hours equal to the number of activation hours of the load, then said electrical load is not taken into account in the calculation of the possible combinations of the Index hour I_h following said determined number of hours.

Moreover, in step 214 the current value of the Index hour I_h is assigned equal to the next value of the Index hour I_h.

From step 214 it returns to step 204.

Therefore the cycle composed of the steps 204, 206, 207, 208, 210, 211, 213, 214 is repeated up to when all the 24 values of the Index hour I_h have been analysed.

The following day a connection/disconnection of the plurality of electrical loads 30, 31, 32, 33, 34 isperformed, according to the outcome of the scheduling performed in the flowchart 200.

Considering for example that the outcome of the scheduling is the Table 4, the following operations are carried out:

- at hour 1 the electrical loads 30, 33, 34 are disconnected from the electric plant 40, while the electrical loads 31, 32 are connected to the electric plant 40;
- at hour 2 the electrical loads 30, 33, 34 are disconnected from the electric plant 40, while the electrical loads 31, 32 are connected to the electric plant 40;
- in the hours comprised between 3 and 18 the electrical loads 30, 31, 32, 33, 34 are disconnected from the electric plant 40;
- at hour 19 the electrical loads 30, 31, are disconnected from the electric plant 40, while the electrical loads 32, 33, 34 are connected to the electric plant 40;
- at hour 20 the electrical loads 30, 31, are disconnected from the electric plant 40, while the electrical loads 32, 33, 34 are connected to the electric plant 40;
- at hour 21 the electrical loads 30, 31, 32, 33, 34 are disconnected from the electric plant 40;
- at hour 22 the electrical load 30 is connected to the electric plant 40, while the electrical loads 31, 32, 33, 34 are disconnected from the electric plant 40;
- at hour 23 the electrical loads 30, 31, are disconnected from the electric plant 40, while the electrical loads 32, 33, 34 are connected to the electric plant 40;
- at hour 24 the electrical load 30 is connected to the electric plant 40, while the electrical loads 31, 32, 33, 34 are disconnected from the electric plant 40.

Note that the fifth operation mode can be used in combination with the first operation mode wherein the number of interruptions (blackouts) of electrical energy towards the electric plant 40 is reduced.

In other words, it is possible for the control unit 3 to perform the scheduling of the connection/disconnection of the plurality of electrical loads as a function of the hourly costs of the electrical energy (for example as indicated in Table 4 above) and it is possible in any case for a operation condition to occur wherein an overload condition could be generated; the control unit 3 periodically controls the value of the instantaneous electrical power P_i in order to verify whether it is necessary to perform the disconnection of one of the electrical loads in order to prevent an overload condition, as previously explained in relation to the description of the first embodiment which corresponds to the first operation mode (flowchart 100 of Figures 4A-4D).

Supposing for example to use the connectiono/disconnection scheduling of the electrical loads according to Table 4, it is possible at hour 20 that the control unit 3 detects the presence of a possible overload condition and that it is performed the disconnection of the electrical load 34 having the lowest priority.

Note that for the purposes of the explanation of the second embodiment ("electricity market") time intervals have been considered of the day and the hours of the day as sub-intervals, but more in general it is possible to consider a defined time interval that is different from the day and respective sub-intervals (of said defined time interval) different from the hour.

It is also an object of the present invention an electronic device to control the electrical energy delivered to an electric plant 40, the device comprising a control unit 3 configured to generate a switching signal S_sw indicating a connected or disconnected condition of a plurality of electrical loads, wherein each of the electrical loads is switchable between the connected condition wherein the electrical load is electrically connected to the electric plant 40 and a disconnected condition wherein the electrical load is electrically disconnected from the electric plant 40.

The electronic control device comprises a memory configured for storing a table associating to each electrical load a respective nominal electrical power value and the number of hours of activation in a day.

The control unit 3 is configured to:

- receive, each day, the hourly cost of the electrical energy;
- sort the hours of the day according to the increasing hourly cost;
- calculate an activation planning on the following day of at least a part of the plurality of electrical loads so as to maximise the electrical power absorbed in the hours of the day during which the hourly cost of the electrical energy is lower, so that at each hour of the day the total sum of the nominal power of the active electrical loads is lower than or equal to a threshold of electrical power and so as to fulfill, for each electrical load, the requirements of activation hours in the day;
- at each hour of the following day, generate the switching signal S_sw indicating the connected condition or the disconnected condition of the plurality of the electrical loads to/from the electric plant 40, on the basis of the outcome of the activation planning.

**Claims**

1. Electronic device (1) to control the electrical energy delivered to an electric plant (40), the device comprising:

   - at least one sensor (2) configured to measure an electrical voltage and an electric current of the electric plant and to generate at least one measurement signal (S_ms) indicating said measurement of the electrical voltage and of the electric current;
   - a control unit (3) electrically connected to the at least one sensor, wherein the control unit is configured to receive the at least one measurement signal and to generate a switching signal (S_sw) indicating a connected or disconnected condition of a plurality of electrical loads (30, 31), wherein each of the electrical loads is switchable between the connected condition wherein the electrical load is electrically connected to the electric plant and a disconnected condition wherein the electrical load is electrically disconnected from the electric plant; wherein the control unit is configured to:

      a) calculate, as a function of the value of the measurement signal, a measure of the instantaneous electrical power (P_i) absorbed by the electric plant;
      b) detect (102, t0) that the value of the measured instantaneous electrical power is greater than the value of a first contractual electric power threshold (P1_ct) and generate the switching signal having a value maintaining the connected condition of each of the plurality of electrical loads (30, 31) currently connected to the electric plant (40);
      b) detect (106, t1) that the value of the measured instantaneous electrical power is greater than the value of a second contractual electric power threshold (P2_ct) and generate the switching signal having the value which maintains the connected condition of each of the plurality of electrical loads (30, 31) currently connected to the electric plant (40), wherein the value of the second contractual electric power threshold is greater than the value of the first contractual electric power threshold;
      d1) measure (107) a second excess time interval indicating the time interval comprised between the instant of detecting the value of the instantaneous electrical power greater than the second contractual electric power threshold and the actual measuring instant;
      d2) calculate (107) a second statistical indicator of absorbed electrical power as a function of the electrical power absorbed by the electric plant during the second excess time interval;
      e) calculate (108) a second intervention time interval (T2_int) shorter than a first time threshold (T1_th);
      f1) detect (109, t2) that the value of the second statistical indicator of the absorbed electrical power is greater than the value of the second contractual electric power threshold (P2_ct);
      f2) detect (109, t2) that the value of the second excess time interval is greater than the value of the second intervention time interval (T2_int);
      g) generate (110) the switching signal having a value indicating the transition from the connected condition to the disconnected condition of at least one electrical load (31) out of the plurality of electrical loads.

2. Electronic device (1) according to claim 1, wherein the control unit is further configured, between b) and c), to:

      b1) measure (103 t0) a first excess time interval indicating the time interval comprised between the instant of detecting the value of the instantaneous electrical power greater than the first contractual electric power threshold and the actual measuring instant;
      b2) calculate (103) a first statistical indicator of absorbed electrical power as a function of the electrical power absorbed by the electric plant during the first excess time interval;

b3) calculate (105) a first intervention time interval (T1_int) lower than a second time threshold (T2_th), wherein the value of the first time threshold is lower than the value of the second time threshold;

and wherein the control unit is further configured, after g), to:

h1) detect (115, t4) that the value of the first statistical indicator of absorbed electrical power is greater than the value of the first contractual electric power threshold (P1_ct);

h2) detect (115, t4) that the value of the first excess time interval is greater than the value of the first intervention time interval (T1_int);

i) generate (116) the switching signal having a value indicating the disconnected condition of at least one further electrical load (30) out of the plurality of electrical loads.

3. Electronic device (1) according to claim 2, wherein the control unit is further configured, between g) and h1), to:

g1) detect (111, t3) that the value of the second excess time interval is greater than the value of the first time threshold (T1_int);

g2) set to zero (112) the second statistical indicator of the absorbed electrical power;

g3) store (113) information indicating that the value of the second contractual electric power threshold (P2_ct) has not been exceeded;

g4) perform (114, 180, t3, t5, t6) an attempt to connect at least one electrical load;

g5) in a case of a positive connection attempt, generate the switching signal having a value indicating the reconnection to the electric plant of at least one electrical load (31) out of the plurality of electrical loads.

4. Electronic device (1) according to claim 3, wherein the control unit is further configured, after h2) and i), to:

l) detect (117, t5) that the value of the first excess time interval is greater than the value of a second time threshold (T2_th);

m) set to zero (118) the first statistical indicator of the absorbed electrical power;

n) store (119) information indicating that the value of the first contractual electric power threshold (P1_ct) has not been exceeded;

o) perform (120, 180, t3, t5, t6) an attempt to connect at least one electrical load;

p) in a case of a positive connection attempt, generate the switching signal having an value indicating the reconnection to the electric plant of at least one further electrical load (30) out of the plurality of electrical loads.

5. Electronic device (1) according to any of the previous claims, wherein the control unit is further configured in b3) to dynamically calculate the first intervention time interval (T1_int) as a function of the first contractual electric power threshold (P1_ct), of the first statistical indicator of electrical power (<P1>) and of the nominal electrical power of only the electrical load currently connected having a lowest priority,
wherein the control unit is further configured in e) to dynamically calculate the second intervention time interval (T2_int) as a function of the second contractual electric power threshold (P2_ct), of the second statistical indicator of electrical power (<P2>) and of the nominal electrical power of only the electrical load currently connected having a lowest priority.

6. Electronic device (1) according to any of the previous claims, wherein the control unit in g) is further configured to:

g10) search for (150-2), among the plurality of electrical loads (30, 31) currently connected to the electric plant, the electrical load having a lowest priority;

g11) identify (150-3) the electrical load having the lowest priority;

g12) disconnect (150-4) the identified electrical load;

g13) update (150-7) calculating parameters of the first and of the second intervention time interval;

wherein in b3) and in e) the control unit is configured to calculate the first and the second intervention time interval as a function of the nominal electrical power absorbed by the plurality of electrical loads, as a function of the respective priority of the plurality of electrical loads and as a function of the values of the updated parameters.

7. Electronic device (1) according to any of the claims from 3 to 6, wherein the control unit in g4) and o) is further configured to:

• search for (180-2), among the plurality of electrical loads currently disconnected from the electric plant, the electrical load having the highest priority;
• identify (180-3) the electrical load having the highest priority;
• detect (180-4) that the sum of the absorbed instantaneous electrical power (P_i) and of the nominal electrical power of the identified electrical load is lower than the value of the first contractual electric power threshold (P1_ct);
• generate (180-6) the switching signal having an value indicating the reconnection to the electric plant of at least one further electrical load out of the plurality of electrical loads;
• update (180-7) calculating parameters of the first and of the second intervention time interval.

8. Electronic device according to any of the previuos claims, further comprising a memory configured to store a table associating to each electrical load a respective nominal electrical power value and the number of activation hours in a day, wherein the control unit is further configured to:

   - receive, each day, the hourly cost of electrical energy;
   - sort the hours of the day on the basis of the increasing hourly cost;
   - calculate an activation planning in the following day of at least a part of the plurality of electrical loads so as to maximise the electrical power absorbed in the hours of the day wherein the hourly cost of the electrical energy is lower, so that at each hour of the day the total sum of the nominal power of the active electrical loads is lower than or equal to a value of electrical power threshold and so as to fulfill, for each electrical load, the requirements of activation hours in the day;
   - at each hour of the following day, generate the switching signal indicating the connected or disconnected condition of the plurality of the electrical loads to/from the electric plant, on the basis of the outcome of said activation planning.

9. Electronic device (1) according to any of the previous claims, further comprising a switching unit (4) electrically connected to the control unit and configured to receive the switching signal and generate therefrom a driving signal (S_drv) for connecting/disconnecting the plurality of electrical loads to/from the electric plant (40).

10. Electronic device (1) according to any of the previous claims, wherein:

    - the first statistical indicator of absorbed electrical power is the mean value of the electrical power absorbed by the electric plant during the first excess time interval;
    - the second statistical indicator of absorbed electrical power is the mean value of the electrical power absorbed by the electric plant during the second excess time interval.

11. System for the management of electrical energy of an electric plant, the system comprising:

    - an electric plant (40) comprising a plurality of electrical loads (30, 31);
    - an electronic counter (41) interposed between an electric distribution network and said electric plant, wherein the electronic counter is configured to measure the electrical power absorbed by the electric plant and for interrupting delivery of electrical energy from the electric distribution network to the electric plant in case wherein an overload condition of the electric plant occurs;
    - an electronic device according to any of the previous claims, wherein the electronic device is electrically connected to the electric plant and is configured to perform the disconnection of at least one of the plurality of electrical loads before an overload condition of the electric plant occurs.

12. Method (100) for controlling the electrical energy delivered to an electric plant (40), the method comprising the steps of:

    a) providing a plurality of electrical loads (30, 31) electrically connected to the electric plant, wherein each of the electrical loads is switchable between the connected condition wherein the electrical load is electrically connected to the electric plant and a disconnected condition wherein the electrical load is electrically disconnected from the electric plant;
    b) calculating a measure of the instantaneous electrical power (P_i) absorbed by the electric plant, as a function of a measure of the electrical voltage and of the electric current of the electric plant;
    c) detecting (t0) that the value of the measured instantaneous electrical power is greater than the value of a first contractual electric power threshold (P1_ct) and maintaining the plurality of electrical loads (30, 31) connected to the electric plant (40);

d) detecting (t1) that the value of the measured instantaneous electrical power is greater than the value of a second contractual electric power threshold (P2_ct) and maintaining the plurality of electrical loads (30, 31) connected to the electric plant (40), wherein the value of the second contractual electric power threshold is greater than the value of the first contractual electric power threshold;

e) measuring (107) a second excess time interval indicating the time interval comprised between the instant of detecting the value of the instantaneous electrical power greater than the second contractual electric power threshold and the actual measuring instant;

f) calculating (107) a second statistical indicator of absorbed electrical power as a function of the electrical power absorbed by the electric plant during the second excess time interval;

g) calculating (108) a second intervention time interval (T2_int) shorter than a first time threshold (T1_th);

h) detecting (t2) that the value of the second statistical indicator of the absorbed electrical power is greater than the value of the second contractual electric power threshold (P2_ct);

i) detecting that the value of the second excess time interval is greater than the value of the second intervention time interval (T2_int);

l) disconnecting at least one electrical load from the electric plant.

**13.** Method (100) for controlling the delivered electrical energy according to claim 12, further comprising, between steps c) and d), the steps of:

c1) measuring (t0, 103) a first excess time interval indicating the time interval comprised between the instant of detecting the value of the instantaneous electrical power greater than the first contractual electric power threshold and the actual measuring instant;

c2) calculating (103) a first statistical indicator of absorbed electrical power as a function of the electrical power absorbed by the electric plant during the first excess time interval;

c3) calculating (105) a first intervention time interval (T1_int) lower than a second time threshold (T2_th), wherein the value of the first time threshold is lower than the value of the second time threshold;

the method further comprising, after step l), the steps of:

m1) detecting (t4, 115) that the value of the first statistical indicator of absorbed electrical power is greater than the value of the first contractual electric power threshold (P1_ct);

m2) detecting (t4, 115) that the value of the first excess time interval is greater than the value of the first intervention time interval (T1_int);

n) generating (116) the switching signal having a value indicating the disconnected condition of at least one further electrical load (30) out of the plurality of electrical loads.

**14.** Method (100) for controlling the delivered electrical energy according to claim 13, further comprising, between steps l) and m1), the steps of:

l1) detecting (t3, 111) that the value of the second excess time interval is greater than the value of the first time threshold (T1_th);

l2) setting to zero (112) the second statistical indicator of absorbed electrical power;

l3) storing (113) information indicating that the value of the second contractual electric power threshold (P2_ct) has not been exceeded;

l4) performing (t6, 114, 180, t3, t5) an attempt to connect at least one electrical load;

l5) in a case of a positive connection attempt, reconnecting to the electric plant at least one electrical load (31) out of the plurality of electrical loads.

**15.** Computer program comprising software code portions adapted to perform the steps of the method according to claims 11-14, when said program is run on at least one computer.

**Patentansprüche**

**1.** Elektronische Vorrichtung (1) zur Regelung der elektrischen Energie, die einer elektrischen Anlage (40) zugeführt wird, wobei die Vorrichtung umfasst:

- mindestens einen Sensor (2), der ausgelegt ist, um eine elektrische Spannung und einen elektrischen Strom der elektrischen Anlage zu messen und um mindestens ein Messsignal (S_ms) zu generieren, das die Messung der elektrischen Spannung und des elektrischen Stroms angibt;

- ein Steuergerät (3), das elektrisch mit dem mindestens einen Sensor verbunden ist, wobei das Steuergerät ausgelegt ist, um das mindestens eine Messsignal zu empfangen und ein Umschaltsignal (S_sw) zu erzeugen, das einen verbundenen oder getrennten Zustand einer Vielzahl elektrischer Lasten (30, 31) angibt, wobei eine jede der elektrischen Lasten zwischen dem verbunden Zustand, in dem die elektrische Last elektrisch mit der elektrischen Anlage verbunden ist, und einem getrennten Zustand, in dem die elektrische Last elektrisch von der elektrischen Anlage getrennt ist, umgeschaltet werden kann,

wobei das Steuergerät ausgelegt ist, um

a) als eine Funktion des Werts des Messsignals eine Messung der von der elektrischen Anlage aufgenommenen Momentanstromstärke (P_i) zu berechnen;

b) zu erfassen (102, t0), dass der Wert der gemessenen Momentanstromstärke größer ist als der Wert einer ersten vertraglichen Stromstärkenschwelle (P1_ct), und um das Umschaltsignal zu generieren, aufweisend einen Wert, der den verbundenen Zustand einer jeden der Vielzahl der elektrischen Lasten (30, 31) aufrechterhält, die gegenwärtig an die elektrische Anlage (40) angeschlossen sind;

b) zu erfassen (106, t1), dass der Wert des gemessenen Momentanstromstärke größer ist als der Wert einer zweiten vertraglichen Stromstärkenschwelle (P2_ct), und um das Umschaltsignal zu generieren, aufweisend den Wert, der den verbundenen Zustand einer jeden der Vielzahl der elektrischen Lasten (30, 31) aufrechterhält, die gegenwärtig an die elektrische Anlage (40) angeschlossen sind, wobei der Wert der zweiten vertraglichen Stromstärkenschwelle größer ist als der Wert der ersten vertraglichen Stromstärkenschwelle ;

d1) ein zweites Überschreitungszeitintervall zu messen (107), das das Zeitintervall zwischen dem Augenblick des Erfassens der Momentanstromstärke, die größer ist als die zweite vertragliche Stromstärkenschwelle, und dem tatsächlichen Augenblick der Messung angibt;

d2) eine zweite statistische Kennzahl der aufgenommenen Stromstärke als eine Funktion der von der elektrischen Anlage während des zweiten Überschreitungszeitintervalls aufgenommenen Stromstärke zu berechnen (107);

e) ein zweites Auslösezeitintervall (T2_int) zu berechnen (108), das kürzer ist als eine erste Zeitschwelle (T1_th);

f1) zu erfassen (109, t2), dass der Wert der zweiten statistischen Kennzahl der aufgenommenen Stromstärke größer ist als der Wert der zweiten vertraglichen Stromstärkenschwelle (P2_ct);

f2) zu erfassen (109, t2), dass der Wert des zweiten Überschreitungszeitintervalls größer ist als der Wert des zweiten Auslösezeitintervalls (T2_int);

g) das Umschaltsignal zu generieren (110), aufweisend einen Wert, der den Übergang vom verbundenen Zustand in den getrennten Zustand von mindestens einer elektrischen Last (31) der Vielzahl der elektrischen Lasten angibt.

2. Elektronische Vorrichtung (1) nach Anspruch 1, wobei das Steuergerät zudem ausgelegt ist, um zwischen b) und c)

b1) ein erstes Überschreitungszeitintervall zu messen (103 t0), das das Zeitintervall zwischen dem Augenblick des Erfassens der Momentanstromstärke, die größer ist als die erste vertragliche Stromstärkenschwelle, und dem tatsächlichen Augenblick der Messung angibt;

b2) eine erste statistische Kennzahl der aufgenommenen Stromstärke als eine Funktion der von der elektrischen Anlage während des ersten Überschreitungszeitintervalls aufgenommenen Stromstärke zu berechnen (103);

b3) ein erstes Auslösezeitintervall (T1_int) zu berechnen (105), das geringer ist als eine zweite Zeitschwelle (T2_th), wobei der Wert der ersten Zeitschwelle geringer ist als der Wert der zweiten Zeitschwelle,

und wobei das Steuergerät zudem ausgelegt ist, um nach g)

h1) zu erfassen (115, t4), dass der Wert der ersten statistischen Kennzahl der aufgenommenen Stromstärke größer ist als der Wert der ersten vertraglichen Stromstärkenschwelle (P1_ct);

h2) zu erfassen (115, t4), dass der Wert des ersten Überschreitungszeitintervalls größer ist als der Wert des ersten Auslösezeitintervalls (T1_int);

i) das Umschaltsignal zu generieren (116), aufweisend einen Wert, der den getrennten Zustand von mindestens einer weiteren elektrischen Last (30) der Vielzahl der elektrischen Lasten angibt.

3. Elektronische Vorrichtung (1) nach Anspruch 2, wobei das Steuergerät zudem ausgelegt ist, um zwischen g) und h1)

g1) zu erfassen (111, t3), dass der Wert des zweiten Überschreitungszeitintervalls größer ist als der Wert der ersten Zeitschwelle (T1_int);

g2) die zweite statistische Kennzahl der aufgenommenen Stromstärke auf null festzulegen (112);

g3) Informationen zu speichern (113), die angeben, dass der Wert der zweiten vertraglichen Stromstärkenschwelle (P2_ct) nicht überschritten wurde;

g4) einen Versuch auszuführen (114, 180, t3, t5, t6), um mindestens eine elektrische Last zu verbinden;

g5) das Umschaltsignal, aufweisend einen Wert, der die erneute Verbindung von mindestens einer elektrischen Last (31) der Vielzahl der elektrischen Lasten mit der elektrischen Anlage angibt, zu generieren, wenn der Verbindungsversuch positiv verläuft.

4. Elektronische Vorrichtung (1) nach Anspruch 3, wobei das Steuergerät zudem ausgelegt ist, um nach h2) und i)

l) zu erfassen (117, t5), dass der Wert des ersten Überschreitungszeitintervalls größer ist als der Wert der zweiten Zeitschwelle (T2_th);

m) die erste statistische Kennzahl der aufgenommenen Stromstärke auf null festzulegen (118);

n) Informationen zu speichern (119), die angeben, dass der Wert der ersten vertraglichen Stromstärkenschwelle (P1_ct) nicht überschritten wurde;

o) einen Versuch auszuführen (120, 180, t3, t5, t6), um mindestens eine elektrische Last zu verbinden;

p) das Umschaltsignal, aufweisend einen Wert, der die erneute Verbindung von mindestens einer weiteren elektrischen Last (30) der Vielzahl der elektrischen Lasten mit der elektrischen Anlage angibt, zu generieren, wenn der Verbindungsversuch positiv verläuft.

5. Elektronische Vorrichtung (1) nach einem der vorhergehenden Ansprüche, wobei das Steuergerät zudem ausgelegt ist, um in b3) dynamisch das erste Auslösezeitintervall (T1_int) als eine Funktion der ersten vertraglichen Stromstärkenschwelle (P1_ct) der ersten statistischen Kennzahl der Stromstärke (<P1>) und der Nennstromstärke von nur der gegenwärtig angeschlossenen elektrischen Last zu berechnen, die eine geringste Priorität aufweist, wobei das Steuergerät zudem ausgelegt ist, um in e) dynamisch das zweite Auslösezeitintervall (T2_int) als eine Funktion der zweiten vertraglichen Stromstärkenschwelle (P2_ct) der zweiten statistischen Kennzahl der Stromstärke (<P2>) und der Nennstromstärke von nur der gegenwärtig angeschlossenen elektrischen Last zu berechnen, die eine geringste Priorität aufweist.

6. Elektrische Vorrichtung (1) nach einem der vorhergehenden Ansprüche, wobei das Steuergerät in g) zudem ausgelegt ist, um

g10) unter der Vielzahl der elektrischen Lasten (30, 31), die gegenwärtig an die elektrische Anlage angeschlossen sind, die elektrische Last zu suchen (150-2), die eine geringste Priorität aufweist;

g11) die elektrische Last mit der geringsten Priorität zu identifizieren (150-3);

g12) die identifizierte elektrische Last zu trennen (150-4);

g13) die Kalkulationsparameter des ersten und des zweiten Auslösezeitintervalls zu aktualisieren (150-7),

wobei das Steuergerät in b3) und in e) ausgelegt ist, um das erste und das zweite Auslösezeitintervall als eine Funktion der von der Vielzahl von elektrischen Lasten aufgenommenen Nennstromstärke als eine Funktion der jeweiligen Priorität der Vielzahl der elektrischen Lasten und als eine Funktion der Werte der aktualisierten Parameter zu berechnen.

7. Elektrische Vorrichtung (1) nach einem der Ansprüche 3 bis 6, wobei das Steuergerät in g4) und o) zudem ausgelegt ist, um

• unter der Vielzahl der elektrischen Lasten, die gegenwärtig von der elektrischen Anlage getrennt sind, die elektrische Last zu suchen (180-2), die die höchste Priorität aufweist;

• die elektrische Last mit der höchsten Priorität zu identifizieren (180-3);

• zu erfassen (180-4), dass die Summe der aufgenommenen Momentanstromstärke (P_i) und der Nennstromstärke der identifizierten elektrischen Last geringer ist als der Wert der ersten vertraglichen Stromstärkenschwelle (P1_ct);

• das Umschaltsignal, aufweisend einen Wert, der die erneute Verbindung von mindestens einer weiteren elektrischen Last der Vielzahl der elektrischen Lasten mit der elektrischen Anlage angibt, zu generieren (180-6);

• die Kalkulationsparameter des ersten und des zweiten Auslösezeitintervalls zu aktualisieren (180-7).

8. Elektronische Vorrichtung nach einem der vorhergehenden Ansprüche, zudem umfassend einen Speicher, der ausgelegt ist, um eine Tabelle zu speichern, wobei mit einer jeden elektrischen Last ein jeweiliger Nennstromwert und die Zahl der Einschaltstunden pro Tag verknüpft werden, wobei das Steuergerät zudem ausgelegt ist, um

- jeden Tag den Strompreis pro Stunde zu empfangen;
- die Stunden des Tags auf der Grundlage des sich erhöhenden Stundenpreises zu sortieren;
- eine Einschaltplanung am folgenden Tag von mindestens einem Teil der Vielzahl der elektrischen Lasten zu berechnen, sodass die in den Stunden des Tags, in denen der Strompreis pro Stunde geringer ist, aufgenommene Stromstärke maximiert wird, sodass die Gesamtsumme der Nennstromstärke der aktivierten elektrischen Lasten in jeder Stunde des Tags kleiner oder gleich einem Wert der Stromstärkenschwelle ist, und sodass in Bezug auf jede elektrische Last die Anforderungen der Einschaltstunden am Tag erfüllt werden;
- in jeder Stunde des folgenden Tags das Umschaltsignal, das den verbundenen oder getrennten Zustand der Vielzahl der elektrischen Lasten mit/von der elektrischen Anlage angibt, auf der Grundlage des Ergebnisses der Einschaltplanung zu generieren.

9. Elektronische Vorrichtung (1) nach einem der vorhergehenden Ansprüche, zudem umfassend eine Schalteinheit (4), die elektrisch mit dem Steuergerät verbunden und ausgelegt ist, um das Umschaltsignal zu empfangen und aus diesem ein Steuersignal (S_drv) zum Verbinden/Trennen der Vielzahl an elektrischen Lasten mit/von der elektrischen Anlage (40) zu generieren.

10. Elektronische Vorrichtung (1) nach einem der vorhergehenden Ansprüche, wobei

- die erste statistische Kennzahl der aufgenommenen Stromstärke der Mittelwert der von der elektrischen Anlage während des ersten Überschreitungszeitintervalls aufgenommenen Stromstärke ist;
- die zweite statistische Kennzahl der aufgenommenen Stromstärke der Mittelwert der von der elektrischen Anlage während des zweiten Überschreitungszeitintervalls aufgenommenen Stromstärke ist.

11. System zum Management der elektrischen Energie einer elektrischen Anlage, wobei das System Folgendes umfasst:

- eine elektrische Anlage (40), umfassend eine Vielzahl von elektrischen Lasten (30, 31);
- einen elektronischen Zähler (41), der zwischen einem elektrischen Verteilungsnetzwerk und der elektrischen Anlage eingesetzt ist, wobei der elektronische Zähler ausgelegt ist, um die von der elektrischen Anlage aufgenommene Stromstärke zu messen und die Zuführung von elektrischer Energie vom Stromverteilungsnetzwerk zur elektrischen Anlage zu unterbrechen, wenn ein Überlastungszustand der elektrischen Anlage eintritt;
- eine elektronische Vorrichtung nach einem der vorhergehenden Ansprüche, wobei die elektronische Vorrichtung elektrisch mit der elektrischen Anlage verbunden und ausgelegt ist, um die Trennung von mindestens einer der Vielzahl der elektrischen Lasten durchzuführen, bevor ein Überlastungszustand der elektrischen Anlage eintritt.

12. Verfahren (100) zur Regelung der elektrischen Energie, die einer elektrischen Anlage (40) zugeführt wird, wobei das Verfahren die folgenden Schritte umfasst:

a) Bereitstellen einer Vielzahl von elektrischer Lasten (30, 31), die elektrisch mit der elektrischen Anlage verbunden sind, wobei eine jede der elektrischen Lasten zwischen dem verbunden Zustand, in dem die elektrische Last elektrisch mit der elektrischen Anlage verbunden ist, und einem getrennten Zustand, in dem die elektrische Last elektrisch von der elektrischen Anlage getrennt ist, umgeschaltet werden kann;
b) Berechnen einer Messung der Momentanstromstärke (P_i), die von der elektrischen Anlage aufgenommen wird, als eine Funktion einer Messung der elektrischen Spannung und des elektrischen Stroms der elektrischen Anlage;
c) Erfassen (t0), dass der Wert der gemessenen Momentanstromstärke größer ist als der Wert einer ersten vertraglichen Stromstärkenschwelle (P1_ct) und Aufrechterhalten der Verbindung der Vielzahl der elektrischen Lasten (30, 31) mit der elektrischen Anlage (40);
d) Erfassen (t1), dass der Wert des gemessenen Momentanstromstärke größer ist als der Wert einer zweiten vertraglichen Stromstärkenschwelle (P2_ct) und Aufrechterhalten der Verbindung der Vielzahl von elektronischen Lasten (30, 31) mit der elektrischen Anlage (40), wobei der Wert der zweiten vertraglichen Stromstärkenschwelle größer ist als der Wert der ersten vertraglichen Stromstärkenschwelle;
e) Messen (107) ein zweites Überschreitungszeitintervalls, das das Zeitintervall zwischen dem Augenblick des Erfassens der Momentanstromstärke, die größer ist als die zweite vertragliche Stromstärkenschwelle, und dem tatsächlichen Augenblick der Messung angibt;

f) Berechnen (107) einer zweiten statistischen Kennzahl der aufgenommenen Stromstärke als eine Funktion der von der elektrischen Anlage während des zweiten Überschreitungszeitintervalls aufgenommenen Stromstärke;

g) Berechnen (108) eines zweites Auslösezeitintervalls (T2_int), das kürzer ist als eine erste Zeitschwelle (T1_th);

h) Erfassen (t2), dass der Wert der zweiten statistischen Kennzahl der aufgenommenen Stromstärke größer ist als der Wert der zweiten vertraglichen Stromstärkenschwelle (P2_ct);

i) Erfassen, dass der Wert des zweiten Überschreitungszeitintervalls größer ist als der Wert des zweiten Auslösezeitintervalls (T2_int);

l) Trennen mindestens einer elektrischen Last von der elektrischen Anlage.

**13.** Verfahren (100) zur Regelung der zugeführten elektrischen Energie nach Anspruch 12, zudem umfassend zwischen Schritt c) und d) die folgenden Schritte:

c1) Messen (t0, 103) eines erstes Überschreitungszeitintervalls, das das Zeitintervall zwischen dem Augenblick des Erfassens der Momentanstromstärke, die größer ist als die erste vertragliche Stromstärkenschwelle, und dem tatsächlichen Augenblick der Messung angibt;

c2) Berechnen (103) einer ersten statistischen Kennzahl der aufgenommenen Stromstärke als eine Funktion der von der elektrischen Anlage während des ersten Überschreitungszeitintervalls aufgenommenen Stromstärke;

c3) Berechnen (105) eines erstes Auslösezeitintervalls (T1_int), das geringer ist als eine zweite Zeitschwelle (T2_th), wobei der Wert der ersten Zeitschwelle geringer ist als der Wert der zweiten Zeitschwelle,

wobei das Verfahren zudem nach Schritt l) die folgenden Schritte umfasst:

m1) Erfassen (t4, 115), dass der Wert der ersten statistischen Kennzahl der aufgenommenen Stromstärke größer ist als der Wert der ersten vertraglichen Stromstärkenschwelle (P1_ct);

m2) Erfassen (t4, 115), dass der Wert des ersten Überschreitungszeitintervalls größer ist als der Wert des ersten Auslösezeitintervalls (T1_int);

n) Generieren (116) des Umschaltsignals, aufweisend einen Wert, der den getrennten Zustand von mindestens einer weiteren elektrischen Last (30) der Vielzahl der elektrischen Lasten angibt.

**14.** Verfahren (100) zur Regelung der zugeführten elektrischen Energie nach Anspruch 13, zudem umfassend zwischen Schritt l) und m1) die folgenden Schritte:

l1) Erfassen (t3, 111), dass der Wert des zweiten Überschreitungszeitintervalls größer ist als der Wert der ersten Zeitschwelle (T1_int) ;

l2) Nullstellung (112) der zweiten statistischen Kennzahl der aufgenommenen Stromstärke;

l3) Speichern (113) von Informationen, die angeben, dass der Wert der zweiten vertraglichen Stromstärkenschwelle (P2_ct) nicht überschritten wurde;

l4) Durchführen (t6, 114, 180, t3, t5) eines Versuchs, um mindestens eine elektrische Last zu verbinden;

l5) Bei positiv verlaufenem Verbindungsversuch Wiederherstellung der Verbindung von mindestens einer elektrischen Last (31) der Vielzahl an elektrischen Lasten.

**15.** Computerprogramm, umfassend Softwarecodeabschnitte, ausgelegt, um die Schritte des Verfahrens nach Anspruch 11 bis 14 durchzuführen, wenn das Programm auf mindestens einem Computer gestartet wird.

**Revendications**

**1.** Dispositif électronique (1) servant à contrôler l'énergie électrique délivrée à une installation électrique (40), le dispositif comprenant :

- au moins un capteur (2) configuré pour mesurer une tension électrique et un courant électrique de l'installation électrique et pour générer au moins un signal de mesure (S_ms) indiquant ladite mesure de la tension électrique et du courant électrique ;
- une unité de commande (3) électriquement reliée à l'au moins un capteur, dans lequel l'unité de commande est configurée pour recevoir l'au moins un signal de mesure et pour générer un signal de commutation (S_sw) indiquant une condition de connexion ou de déconnexion d'une pluralité de charges électriques (30, 31), dans lequel chacune des charges électriques peut commuter entre la condition de connexion, dans laquelle la charge électrique est électriquement connecté à l'installation électrique, et une condition de déconnexion dans laquelle la charge électrique est électriquement déconnectée de l'installation électrique ;
dans lequel l'unité de commande est configurée pour :

a) calculer, en fonction de la valeur du signal de mesure, une mesure de la puissance électrique instantanée (P_i) absorbée par l'installation électrique ;

b) détecter (102, t0) que la valeur de la puissance électrique instantanée mesurée est supérieure à la valeur d'un premier seuil contractuel de puissance électrique (P1_ct) et générer le signal de commutation comportant une valeur maintenant la condition de connexion de chacune des charges de la pluralité de charges électriques (30, 31) actuellement connectées à l'installation électrique (40) ;

b) détecter (106, t1) que la valeur de la puissance électrique instantanée mesurée est supérieure à la valeur d'un second seuil contractuel de puissance électrique (P2_ct) et générer le signal de commutation comportant la valeur qui maintient la condition de connexion de chacune des charges de la pluralité de charges électriques (30, 31) actuellement connectées à l'installation électrique (40), dans lequel la valeur du second seuil contractuel de puissance électrique est supérieure à la valeur du premier seuil contractuel de puissance électrique ;

d1) mesurer (107) un second intervalle de temps excédentaire indiquant l'intervalle de temps compris entre l'instant de détection de la valeur de la puissance électrique instantanée supérieure au second seuil contractuel de puissance électrique et l'instant de mesure réel ;

d2) calculer (107) un second indicateur statistique de la puissance électrique absorbée en fonction de la puissance électrique absorbée par l'installation électrique durant le second intervalle de temps excédentaire ;

e) calculer (108) un second intervalle de temps d'intervention (T2_int) plus court qu'un premier seuil de temps (T1_th) ;

f1) détecter (109, t2) que la valeur du second indicateur statistique de la puissance électrique absorbée est supérieure à la valeur du second seuil contractuel de puissance électrique (P2_ct) ;

f2) détecter (109, t2) que la valeur du second intervalle de temps excédentaire est supérieure à la valeur du second intervalle de temps d'intervention (T2_int) ;

g) générer (110) le signal de commutation comportant une valeur indiquant la transition de la condition de connexion à la condition de déconnexion d'au moins une charge électrique (31) de la pluralité de charges électriques.

2. Dispositif électronique (1) selon la revendication 1, dans lequel l'unité de commande est de plus configurée, entre b) et c), pour :

b1) mesurer (103 t0) un premier intervalle de temps excédentaire indiquant l'intervalle de temps compris entre l'instant de détection de la valeur de la puissance électrique instantanée supérieure au premier seuil contractuel de puissance électrique et l'instant de mesure réel ;

b2) calculer (103) un premier indicateur statistique de la puissance électrique absorbée en fonction de la puissance électrique absorbée par l'installation électrique durant le premier intervalle de temps excédentaire ;

b3) calculer (105) un premier intervalle de temps d'intervention (T1_int) inférieur à un second seuil de temps (T2_th), dans lequel la valeur du premier seuil de temps est inférieure à la valeur du second seuil de temps ;

et dans lequel l'unité de commande est de plus configurée, après g), pour :

h1) détecter (115, t4) que la valeur du premier indicateur statistique de la puissance électrique absorbée est supérieure à la valeur du premier seuil contractuel de puissance électrique (P1_ct) ;

h2) détecter (115, t4) que la valeur du premier intervalle de temps excédentaire est supérieure à la valeur du premier intervalle de temps d'intervention (T1_int) ;

i) générer (116) le signal de commutation comportant une valeur indiquant la condition de déconnexion d'au moins une charge électrique (30) supplémentaire de la pluralité de charges électriques.

3. Dispositif électronique (1) selon la revendication 2, dans lequel l'unité de commande est de plus configurée, entre g) et h1), pour :

g1) détecter (111, t3) que la valeur du second intervalle de temps excédentaire est supérieure à la valeur du premier seuil de temps (T1_int) ;

g2) régler à zéro (112) le second indicateur statistique de la puissance électrique absorbée ;

g3) mémoriser (113) les informations indiquant que la valeur du second seuil contractuel de puissance électrique (P2_ct) n'a pas été dépassée ;

g4) effectuer (114, 180, t3, t5, t6) une tentative de connexion d'au moins une charge électrique ;

g5) dans le cas d'une tentative de connexion positive, générer le signal de commutation comportant une valeur indiquant la reconnexion à l'installation électrique d'au moins une charge électrique (31) de la pluralité de charges électriques.

4. Dispositif électronique (1) selon la revendication 3, dans lequel l'unité de commande est de plus configurée, après h2) et i), pour :

l) détecter (117, t5) que la valeur du premier intervalle de temps excédentaire est supérieure à la valeur d'un second seuil de temps (T2_th) ;

m) régler à zéro (118) le premier indicateur statistique de la puissance électrique absorbée ;

n) mémoriser (119) les informations indiquant que la valeur du premier seuil contractuel de puissance électrique (P1_ct) n'a pas été dépassée ;

o) effectuer (120, 180, t3, t5, t6) une tentative de connexion d'au moins une charge électrique ;

p) dans le cas d'une tentative de connexion positive, générer le signal de commutation comportant une valeur indiquant la reconnexion à l'installation électrique d'au moins une charge électrique (30) supplémentaire de la pluralité de charges électriques.

5. Dispositif électronique (1) selon l'une quelconque des revendications précédentes, dans lequel l'unité de commande est de plus configurée en b3) pour calculer de façon dynamique le premier intervalle de temps d'intervention (T1_int), en fonction du premier seuil contractuel de puissance électrique (P1_ct), du premier indicateur statistique de la puissance électrique (<P1>) et de la puissance électrique nominale uniquement de la charge électrique actuellement connectée ayant la priorité la plus faible,

dans lequel l'unité de commande est de plus configurée en e) pour calculer de façon dynamique le second intervalle de temps d'intervention (T2_int), en fonction du second seuil contractuel de puissance électrique (P2_ct), du second indicateur statistique de la puissance électrique (<P2>) et de la puissance électrique nominale uniquement de la charge électrique actuellement connectée ayant la priorité la plus faible.

6. Dispositif électronique (1) selon l'une quelconque des revendications précédentes, dans lequel l'unité de commande en g) est de plus configurée pour :

g10) rechercher (150-2), parmi la pluralité de charges électriques (30, 31) actuellement connectées à l'installation électrique, la charge électrique ayant la priorité la plus faible ;

g11) identifier (150-3) la charge électrique ayant la priorité la plus faible ;

g12) déconnecter (150-4) la charge électrique identifiée ;

g13) actualiser (150-7) les paramètres de calcul du premier et du second intervalle de temps d'intervention ;

dans lequel en b3) et en e), l'unité de commande est configurée pour calculer le premier et le second intervalle de temps d'intervention en fonction de la puissance électrique nominale absorbée par la pluralité de charges électriques, en fonction de la priorité respective de la pluralité de charges électriques et en fonction des valeurs des paramètres actualisés.

7. Dispositif électronique (1) selon l'une quelconque des revendications de 3 à 6, dans lequel l'unité de commande en g4) et o) est de plus configurée pour :

• rechercher (180-2), parmi la pluralité de charges électriques actuellement déconnectées de l'installation électrique, la charge électrique ayant la priorité la plus haute ;

• identifier (180-3) la charge électrique ayant la priorité la plus haute ;

• détecter (180-4) que la somme de la puissance électrique instantanée absorbée (P_i) et de la puissance électrique nominale de la charge électrique identifiée est inférieure à la valeur du premier seuil contractuel de la puissance électrique (P1_ct) ;

• générer (180-6) le signal de commutation comportant une valeur indiquant la reconnexion à l'installation électrique d'au moins une charge électrique supplémentaire de la pluralité de charges électriques ;

**EP 3 293 494 B1**

• actualiser (180-7) les paramètres de calcul du premier et du second intervalle de temps d'intervention.

8. Dispositif électronique selon l'une quelconque des revendications précédentes, comprenant de plus une mémoire configurée pour stocker une table associant à chaque charge électrique une valeur de puissance électrique nominale et le nombre d'heures d'activation en une journée, dans lequel l'unité de commande est de plus configurer pour :

- recevoir, chaque jour, le coût horaire de l'énergie électrique ;
- trier les heures diurnes sur la base du coût horaire progressif ;
- calculer un planning d'activation le jour suivant d'au moins une partie de la pluralité de charges électriques de sorte à maximiser la puissance électrique absorbée durant les heures de la journée, dans lequel le coût horaire de l'énergie électrique est inférieur, de manière à ce qu'à chaque heure de la journée la somme totale de la puissance nominale des charges électriques actives soit inférieure ou égale à une valeur du seuil de la puissance électrique et de sorte à satisfaire, pour chaque charge électrique, les exigences des heures d'activation pendant la journée ;
- à chaque heure du jour suivant, générer le signal de commutation indiquant la condition de connexion ou de déconnexion de la pluralité de charges électriques à/de l'installation électrique sur la base de l'issue dudit planning d'activation.

9. Dispositif électronique (1) selon l'une quelconque des revendications précédentes, comprenant de plus une unité de commutation (4) connectée électriquement à l'unité de commande et configurée pour recevoir le signal de commutation et générer de cette dernière un signal d'attaque (S_drv) pour connecter/déconnecter la pluralité de charges électriques à/de l'installation électrique (40).

10. Dispositif électronique (1) selon l'une quelconque des revendications précédentes, dans lequel :

- le premier indicateur statistique de la puissance électrique absorbée est la valeur moyenne de la puissance électrique absorbée par l'installation électrique durant le premier intervalle de temps excédentaire ;
- le second indicateur statistique de la puissance électrique absorbée est la valeur moyenne de la puissance électrique absorbée par l'installation électrique durant le second intervalle de temps excédentaire.

11. Système de gestion de l'énergie électrique d'une installation électrique, le système comprenant :

- une installation électrique (40) comprenant une pluralité de charges électriques (30, 31) ;
- un compteur électronique (41) interposé entre un réseau de distribution électrique et ladite installation électrique, dans lequel le compteur électronique est configuré pour mesurer la puissance électrique absorbée par l'installation électrique et pour interrompre la fourniture d'énergie électrique du réseau de distribution électrique à l'installation électrique si une condition de surcharge de l'installation électrique a lieu ;
- un dispositif électronique selon l'une quelconque des revendications précédentes, dans lequel le dispositif électronique est électriquement connecté à l'installation électrique et est configuré pour effectuer la déconnexion d'au moins une des charges électriques de la pluralité de charges électriques avant que ne survienne une condition de surcharge de l'installation électrique.

12. Procédé (100) servant à contrôler l'énergie électrique délivrée à une installation électrique (40), le procédé comprenant les étapes de :

a) prévoir une pluralité de charges électriques (30, 31) connectées électriquement à l'installation électrique, dans lequel chacune des charges électriques peut permuter entre la condition de connexion, dans laquelle la charge électrique est électriquement connectée à l'installation électrique, et une condition de déconnexion dans laquelle la charge électrique est électriquement déconnectée de l'installation électrique ;
b) calculer une mesure de la puissance électrique instantanée (P_i) absorbée par l'installation électrique, en fonction d'une mesure de la tension électrique et du courant électrique de l'installation électrique ;
c) détecter (t0) que la valeur de la puissance électrique instantanée mesurée est supérieure à la valeur d'un premier seuil contractuel de puissance électrique (P1_ct) et maintenir la pluralité de charges électriques (30, 31) connectées à l'installation électrique (40) ;
d) détecter (t1) que la valeur de la puissance électrique instantanée mesurée est supérieure à la valeur d'un second seuil contractuel de puissance électrique (P2_ct) et maintenir la pluralité de charges électriques (30, 31) connectées à l'installation électrique (40), dans lequel la valeur du second seuil contractuel de puissance électrique est supérieure à la valeur du premier seuil contractuel de puissance électrique ;

e) mesurer (107) un second intervalle de temps excédentaire indiquant l'intervalle de temps compris entre l'instant de détection de la valeur de la puissance électrique instantanée supérieure au second seuil contractuel de puissance électrique et l'instant de mesure réel ;
f) calculer (107) un second indicateur statistique de la puissance électrique absorbée en fonction de la puissance électrique absorbée par l'installation électrique durant le second intervalle de temps excédentaire ;
g) calculer (108) un second intervalle de temps d'intervention (T2_int) plus court qu'un premier seuil de temps (T1_th) ;
h) détecter (t2) que la valeur du second indicateur statistique de la puissance électrique absorbée est supérieure à la valeur du second seuil contractuel de puissance électrique (P2_ct) ;
i) détecter que la valeur du second intervalle de temps excédentaire est supérieure à la valeur du second intervalle de temps d'intervention (T2_int) ;
l) déconnecter au moins une charge électrique de l'installation électrique.

13. Procédé (100) destiné à contrôler l'énergie électrique délivrée selon la revendication 12, comprenant de plus, entre les étapes c) et d), les étapes consistant à :

c1) mesurer (t0, 103) un premier intervalle de temps excédentaire indiquant l'intervalle de temps compris entre l'instant de détection de la valeur de la puissance électrique instantanée supérieure au premier seuil contractuel de puissance électrique et l'instant de mesure réel ;
c2) calculer (103) un premier indicateur statistique de la puissance électrique absorbée en fonction de la puissance électrique absorbée par l'installation électrique durant le premier intervalle de temps excédentaire ;
c3) calculer (105) un premier intervalle de temps d'intervention (T1_int) inférieur à un second seuil de temps (T2_th), dans lequel la valeur du premier seuil de temps est inférieure à la valeur du second seuil de temps ;

le procédé comprenant de plus, après l'étape l), les étapes de :

m1) détecter (t4, 115) que la valeur du premier indicateur statistique de la puissance électrique absorbée est supérieure à la valeur du premier seuil contractuel de puissance électrique (P1_ct) ;
m2) détecter (t4, 115) que la valeur du premier intervalle de temps excédentaire est supérieure à la valeur du premier intervalle de temps d'intervention (T1_int) ;
n) générer (116) le signal de commutation comportant une valeur indiquant la condition de déconnexion d'au moins une charge électrique (30) supplémentaire de la pluralité de charges électriques.

14. Procédé (100) destiné à contrôler l'énergie électrique délivrée selon la revendication 13, comprenant de plus, entre les étapes l) et m1), les étapes consistant à :

l1) détecter (t3, 111) que la valeur du second intervalle de temps excédentaire est supérieure à la valeur du premier seuil de temps (T1_th) ;
l2) régler à zéro (112) le second indicateur statistique de la puissance électrique absorbée ;
l3) mémoriser (113) les informations indiquant que la valeur du second seuil contractuel de puissance électrique (P2_ct) n'a pas été dépassée ;
l4) effectuer (t6, 114, 180, t3, t5) une tentative de connexion d'au moins une charge électrique ;
l5) dans le cas d'une tentative de connexion positive, reconnecter à l'installation électrique au moins une charge électrique (31) de la pluralité de charges électriques.

15. Programme informatique comprenant des parties de code de logiciel adaptées pour effectuer les étapes du procédé selon les revendications 11 à 14, lorsque ledit programme est exécuté sur au moins un ordinateur.

Fig. 1

Fig. 2

Fig. 3

Fig. 4A

100

from 106

YES                    107

Measure of a second excess time interval indicating the time interval comprised between the instant of detecting the value of the instantaneous electrical power greater than the value of the second contractual electric power threshold and the actual measuring instant;
Calculation of a second statistical indicator of absorbed electrical power <P2> as a function of the electrical power absorbed by the electric plant during the second excess time interval;
Second contractual electric power threshold P2_ct exceeded

108

Calculation of a second intervention time interval T2_int

Second statistical indicator of absorbed electrical power <P2> > Second contractual electric power threshold P2_ct
AND
Second excess time interval > second intervention time interval T2_int
AND
Disconnection of at least one electrical load not taken place?                    109

NO

YES                    110

Disconnection of at least one electrical load of the electric plant

towards 111

Fig. 4B

da 110

100

**111** Second excess time interval > first time threshold T1_th ?

YES

NO

from 106

**112** Reset of the second statistical indicator of absorbed electrical power <P2>

**113** Second contractual electric power threshold P2_ct not exceeded

**114** Evaluation of the connection of at least one electrical load to the electric plant

**115** First statistical indicator of absorbed electrical power <P1> > first contractual electric power threshold P1_ct
AND
First excess time interval > first intervention time interval T1_int
AND
Disconnection of at least one electrical load not taken place?

YES

NO

**116** Disconnection of at least one electrical load of the electric plant

towards 117

Fig. 4C

100

from 115

First excess time
interval >
Second time
threshold T2_th?          117

YES                       118

Reset of the first statistical
indicator of absorbed electrical
power <P1>

119

First contractual electric power
threshold P1_ct not exceeded

120

Evaluation of the connection of at least
one electrical load to the electric plant

NO

121

End

Fig. 4D

150-1 Start

150

150-2 Search for the load having the lowest priority

150-5 Selection of the next electrical load

150-3 Electrical load having the lowest priority identified? NO

YES

150-4 Is identified electrical load connected? NO

YES

150-6 Disconnection of the identified electrical load

150-7 Update of parameters for calculating first and second intervention time interval T1_int, T2_int

150-8 End

Fig. 5

180

Searc ⟋180-1

Search for the electrical load having the highest priority ⟋180-2

Electrical load identified? ⟋180-3

NO

YES

180-5

Selection of the next electrical load

(Instantaneous electrical power P_i+ Nominal electrical power of the identified electrical load) < First contractual electric power threshold P1_ct AND Identified electrical load disconnected? ⟋180-4

NO

YES

Connection of identified electrical load ⟋180-6

180-7 ⟍ Update of parameters for calculating first and second intervention time interval T1_int, T2_int

180-8 ⟍ End

Fig. 6

200

Start 201

202

Reading of the hourly costs of the electrical energy

203

Generation of a table of the hours of the day sorted on the basis of the increasing hourly cost

205

End ← NO — Current value of Index hour ≤ 24 ? 204 ← from 214

YES

206

Calculation, for the current value of the Index hour, of a plurality of possible combinations of the plurality of electrical loads

207

Selection, for the current value of the Index hour, of a current combination of electrical loads out of the plurality of possible combinations

208

Calculation, for the current value of the Index hour, of the total nominal electrical power of the current combination of active electrical loads

from 212 →

towards 210

Fig. 7A

Fig. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1898292 A1